# EUROPEAN PATENT SPECIFICATION

(11) **EP 0 759 591 B1**
(45) Date of publication and mention of the grant of the patent: **08.01.2003**
(21) Application number: 96305996.9
(22) Date of filing: 16.08.1996
(51) Int. Cl.: G06F 9/46

(54) **Event management service**
Ereignisverwaltungsdienst
Service de gestion d'événements

(30) Priority: 18.08.1995 US 516854; 18.08.1995 US 516856
(43) Date of publication of application: 26.02.1997
(73) Proprietor: International Business Machines Corporation, Armonk, N.Y. 10504 (US)
(72) Inventor: Cohen, Richard Jay, Austin, Texas 78750 (US); Wilson, Gregory Alan, Austin, Texas 78731 (US)
(74) Representative: Davies, Simon Robert

(56) References cited:
- EP-A- 0 537 098
- IBM TECHNICAL DISCLOSURE BULLETIN, vol. 37, no. 12, December 1994, NEW YORK US, pages 587-588, XP000487904 "LAN Netview FIX Remote Event Enablement/Disablement"
- JODY KELLY ET AL.: "OS/2 2.1 Application Programmer's Guide" 1994 , VAN NOSTRAND REINHOLD , NEW YORK,US XP002019252 * page 621, line 1 - page 632, last line *
- DOUGLAS C. SCHMIDT: 'Scalable High-Performance Event Filtering for Dynamic Multi-point Applications' PROCEEDINGS 1ST INTERNATIONAL WORKSHOP ON HIGH PERFORMANCE PROTOCOL ARCHITECTURES (HIPPARCH) 15 December 1994 - 16 December 1994, SOPHIA ANTIPOLIS, FR, pages 1 - 9

## Description

The present invention relates generally to computing networks and more particularly to methods for managing events in a distributed computing environment.

It is well known to interconnect multiple computers into a local area network (LAN) to enable such computers to exchange information and share resources. A local area network provides a distributed computing environment in which users can access distributed resources and process applications on multiple computers. An "event" marks a change in state of some managed resource in the environment.

A known distributed computing environment (DCE) has been implemented using software available from the Open Systems Foundation (OSF). Prior OSF DCE computer network implementations provide event services on a local level only. Thus, events generated on a particular machine in the network are only logged or displayed on the machine itself. Other machines in the network have no efficient means for receiving notification when events occur in remote resources in the network. This deficiency makes it difficult for a system manager to remotely manage other resources in the network.

There are event service architectures known in the prior art. One known architecture is the DME Event Service (EVS), which is described in "DME Event Services Architecture, Version 2.0" by Ferrante, dated April 28, 1993. This service uses the concept of event suppliers (who produce event data) and event consumers (who process event data generated by the suppliers), but the service has a cumbersome subscription mechanism, is complex and cannot be integrated into other existing DCE services. Another known architecture is the OMG Event Service model, which is described in the "Joint Object Services Submission- Event Service Specification," OMG TC 93.7.3, dated July 2, 1993. This architecture provides an object-based event service that defines two basic models for communicating event data: the push model, which allows event suppliers to initiate the transfer of events to consumers, and the pull model, which allows event consumers to request events from event suppliers. Theoretically, an event channel object allows multiple suppliers to communicate with multiple consumers in an asynchronous way. The main drawback to the OMG Event Service model is that there is no currently-available implementations.

The paper by Douglas C. Schmidt: "Scalable High-Performance Event Filtering for Dynamic Multi-point Applications", was presented at the Proceedings 1st International Workshop on High Performance Protocol Architecture (HIPPAECH), INRIA, Sophia Antipolis, France, on December 15-16, 1994. It outlines the key characteristics of dynamic multi-point applications, reviews related work, and describes the features provided by an event filtering framework.

Accordingly, the invention provides a method of managing events in a distributed computing environment wherein one or more event suppliers (24a-24n) generate events to be communicated to one or more event consumers (26a-26n), comprising the steps of: having an event consumer define an event filter (45) including one or more filter expressions, the method characterised by the steps of: having the event consumer define an event filter group identifying the event filter, providing the option for said event filter group to identify more than one event filter, wherein at least the event filter includes one or more filter expressions, the event filter group including information determining whether particular events generated by the one or more event suppliers are communicated to the event consumer; for a given event determining if all event filter expressions of any event filter of an event filter group evaluate to a predetermined condition; and communicating the given event to the event consumer if all event filter expressions of any event filter of the event filter group evaluate to the predetermined condition.

In the preferred embodiment, the event filter group includes one or more event filter names identifying the one or more event filters, and each event filter of the event filter group includes one or more filter expressions. The determining step includes:
(a) determining whether all event filters in the event filter group have been evaluated;
(b) if all event filters in the event filter group have not been evaluated, selecting a next event filter for evaluation;
(c) determining whether all of the filter expressions in the next event filter evaluate to the predetermined condition;
(d) if all of the filter expressions in the next event filter evaluate to the predetermined condition, communicating the event to the event consumer;
(e) if any of the filter expressions in the event filter do not evaluate to the predetermined condition, returning to step (a).

In the preferred embodiment, the information is one or more event type schemas each describing an event type and comprising a list of attribute name/type pairs which specify a data format of an event, wherein an attribute name/type pair comprises an attribute name identifying an attribute of a given event type and an attribute type defining the data format in the attribute. Each filter expression of the event filter comprises an attribute name, an attribute operator and an attribute value, wherein the attribute operator compares the attribute named in the event and the attribute value.

The information may also or alternatively comprise a header attribute associated with an event.

Preferably, an event management service identifies whether an event is one of the particular events to be forwarded to the event consumer and the event is associated with a predetermined remote procedure call (RPC). The relevant events are forwarded from the event management service to the event consumer.

In a preferred embodiment, the predetermined RPC is issued from an event recording service, and the event is supplied from the event management service to the event consumer using a remote procedure call. Each event consumer is registered with the event management service, which preferably authenticates the event consumer with a security service. Generally the event suppliers are unaware of the event consumers who have registered with the event management service to receive that event supplier's events. It is also preferred that incoming events are saved in an event log for backup recovery purposes.

The invention further provides a computer system for providing an event management service in a distributed computing environment in which users can access distributed resources comprising: event management service means (22) for establishing an event channel through which events are passed from one or more event suppliers (24a-24n) to one or more event consumers (26a-26n); and means (45) for filtering the events generated by the one or more event suppliers to determine which events are passed to the one or more event consumers, wherein the filtering means comprises: means for defining an event filter including one or more filter expressions, the filtering means being characterised by: means for defining an event filter group for each event consumer, the event filter group identifying the event filter; means for enabling the event filter group to identify more than one event filter, wherein at least the event filter includes one or more filter expressions, the event filter group including information that determines whether particular events generated by the one or more event suppliers are communicated to the event consumer; and means for determining for a given event if all event filter expressions of any event filter of an event filter group evaluate to a predetermined condition; and means for communicating the given event to the event consumer if all event filter expressions of any event filter of the event filter group evaluate to the predetermined condition.

Preferably, the computer system further includes remote procedure call means for supplying events from the one or more event suppliers to the event management service means, and from the event management service means to the one or more event consumers.

Preferably, the computer system further includes access control means for authenticating event consumers to receive events from the event management service means, and event recording service means for providing events from the one or more event suppliers to the event management service means.

The above approach allows event management services for both traditional and object-oriented system architectures wherein managed resources can send'asynchronous notifications or "events" to interested parties. Such a system enables multiple event suppliers to communicate with multiple event consumers in an asynchronous fashion in a distributed computing environment, and can tightly integrate an event management service into an existing distributed computing environment event service to transparently supply events in an asynchronous manner to authorized, remote event consumers. Events may be communicated between event supplier and event consumer by issuing remote DCE procedure calls (RPC's) by the DCE RPC-based asynchronous event management service, wherein event suppliers and consumers are authenticated prior to using the service by a DCE security service.

The preferred embodiment integrates an event management service into a DCE network implementation using event forwarding, security and remote procedure call services in the DCE network to filter events generated by one or more event suppliers to determine whether particular events are to be communicated to one or more event consumers. Event consumers can locate and register with one or more event management services running on multiple host computers in the network. Event consumers can control which host computers send events and the particular types of events sent. Event suppliers need not be aware of the event consumers that have registered to receive events. Preferably, a particular supplier need only send an event once to ensure that interested event consumers receive notification of that event. Events are reliably delivered to consumers with minimal network and system load, and in a manner that is tolerant of network and machine failures.

Thus in a preferred embodiment, a method of managing events in a distributed computing environment is provided wherein one or more event suppliers generate events to be consumed by one or more event consumers. The method begins by having an event consumer register with an event management service (EMS) to receive selected events generated from the one or more event suppliers. In response to a remote procedure call (RPC) from a DCE event recording service, the event management service uses a filtering mechanism to determine whether the event associated with the RPC has been selected by the event consumer. If the EMS determines that the event data associated with the RPC has been selected by the event consumer, it issues a remote procedure call to supply the event data to the event consumer. When multiple event consumers register with the event management service, events occurring on remote machines in the network are asynchronously and transparently supplied to event consumers.

In the preferred embodiment, the event management service is tightly coupled to a DCE event recording service, although this integration is not necessarily required as the event management service may be accessed directly. Also, it is preferred (although not required) that suppliers and consumers be authenticated in connection with registering with the event management service, and such authentication may advantageously be carried out by a DCE security service. Thus, preferably the event management service takes advantage of existing event recording, security and remote procedure call services in the DCE network to provide efficient asynchronous event management.

The filter mechanism controls how event data generated by the event suppliers is passed to particular event consumers. Each event consumer that registers with the EMS defines an event filter group that determines whether particular events generated by the one or more event suppliers are communicated to that event consumer. An event filter group includes one or more event filters, each of which is derived from one or more predefined event type schemas and/or information in a header associated with each event. The filter mechanism parses events through the event filter groups of the event consumers. Events that satisfy the parsing protocol for a particular event consumer are communicated to that consumer via a remote procedure call.

In the event service, often multiple event consumers are interested in the same event data, yet event consumers may not be able to consume events as fast as they are transmitted from the service. In addition, it is desired that when sending an event, suppliers should not be blocked while trying to forward the event to the EMS, and the event service should not be blocked while attempting to forward the event to interested consumers. To achieve these goals, the Event Management Service implements a queueing mechanism that utilizes a number of threads-based services including a process control routine to ensure that neither event suppliers nor event consumers take any actions that block the event channel.

Typically the invention is implemented using computer program data encoded in the substrate of the computer-readable storage medium, wherein the storage medium so configured causes a computer to manage event data by establishing an event channel through which events are passed asynchronously from one or more supplier processes to one or more consumer processes. An event management service (EMS) is responsive to remote procedure calls (RPC's) for establishing the event channel.

A preferred embodiment of the invention will now be described in detail by way of example only with reference to the following drawings:
FIGURE 1 illustrates a computer network;
FIGURE 2 illustrates a representative distributed computing domain of connected machines;
FIGURE 3 is a diagram showing a representative implementation of the event management service within the context of a DCE subsystem;
FIGURE 4 is a diagram showing how event filters are formulated;
FIGURE 5 is a flowchart illustrating an event consumer parser routine of the filter mechanism;
FIGURE 6 is a diagram showing a queue configuration for the event management service;
FIGURE 7 is a flowchart illustrating an event queue management routine; and
FIGURE 8 is a block diagram of a computer system.

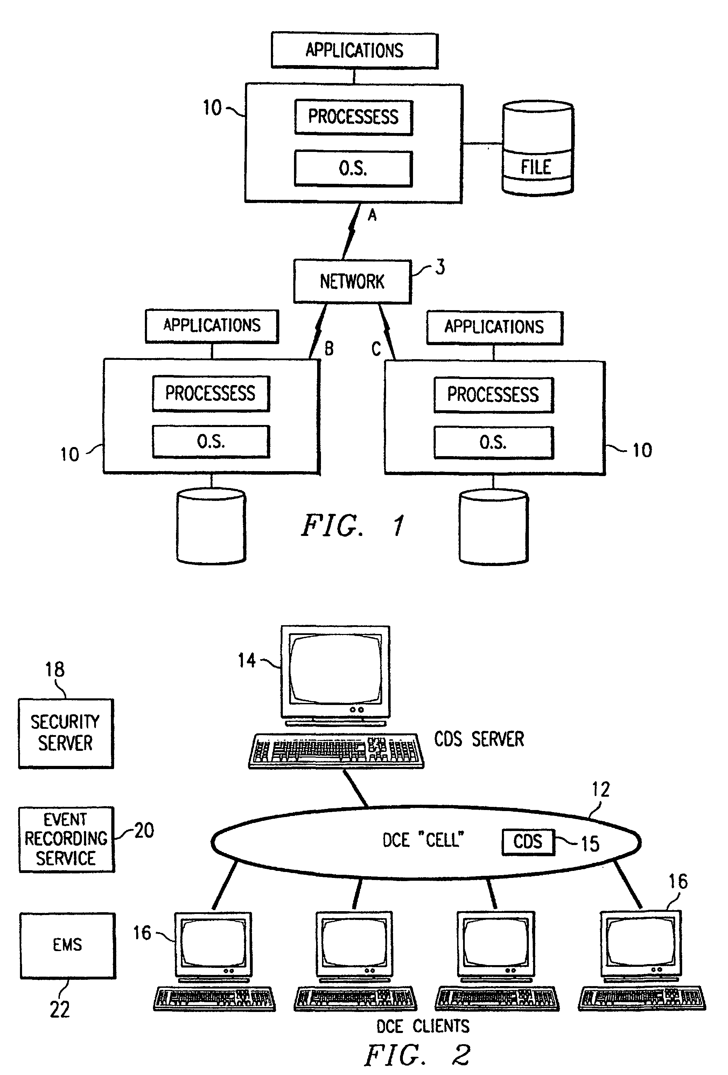

A known distributed computing environment (DCE) is illustrated in FIGURE 1 and includes two or more nodes A, B and C connected through a communication link or network 3. The network 3 can be a local area network (LAN) or a wide area network (WAN), the latter comprising a switched or leased teleprocessing (TP) connection to other nodes or to a network of systems operating under a known computer architecture. At any of the nodes A, B or C there may be a processing system 10A, 10B or 10C. Each of these systems may be a single user system or a multi-user system. Each of the processing systems may operate as a client or server, depending on whether it is requesting or supplying services.

Each of the processing systems is a computer, referred to herein sometimes as a "machine." For example, each computer may be a RISC System/6000 (a reduced instruction set or so-called RISC-based workstation) running the AIX (Advanced Interactive Executive) operating system. The AIX operating system is compatible at the application interface level with AT&T's UNIX operating system, version 5.2. The various models of the RISC-based personal computers are described in many publications of the IBM Corporation, for example, RISC System/6000, 7073 and 7016 POWERstation and POWERserver Hardware Technical Reference, Order No. SA23-2644-00. The AIX operating system is described in AIX Operating System Technical Reference, published by IBM Corporation, First Edition (November, 1985), and other publications. A detailed description of the design of the UNIX operating system is found in a book by Maurice J. Bach, Design of the Unix Operating System, published by Prentice-Hall (1986). Another possibility is for each computer to be an IBM PS/2 workstation running under the OS/2 operating system. For more information on PS/2 computers and the OS/2 operating system, the reader is directed to Technical Reference Manual Personal Systems/2 Model 50, 60 Systems IBM Corporation, Part No. 68x2224 Order Number S68X-2224 and OS/2 2.0 Technical Library, Programming Guide Volumes 1-3 Version 2.00, Order Nos. 10G6261, 10G6495 and 10G6494.

In a preferred embodiment, a plurality of IBM RISC System/6000 machines are interconnected by the Transmission Control Protocol/Internet Protocol (TCP/IP) architecture. TCP/IP uses as its link level Ethernet, a local area network (LAN) developed by Xerox Corporation. A simplified description of local area networks may be found in a book by Larry E. Jordan and Bruce Churchill entitled Communications and Networking for the IBM PC, published by Robert *J.* Brady (a Prentice-Hall Company)(1983).

The skilled person will appreciate that although the invention is described in the above-identified context, it is also applicable to many different machines, software systems, configurations and networks, other than those specifically described.

The distributed computing environment may have any number of machines, and these machines may be located in different geographic locations. For illustrative purposes, the remainder of the detailed discussion is directed to a DCE domain or "cell," which is a relatively smaller version of the network (with up to about 25 machines), although the teachings of the invention are applicable to any distributed computing environment, whether traditional, such as Simple Network Management Protocol (SNMP) or Common Management Information Protocol (CMIP), or whether object-oriented.

FIGURE 2 shows a representative DCE cell 12 comprising a set of connected machines, including at least one server 14 and the DCE clients 16, which share a common cell name and a namespace. Each cell provides a location independent namespace service called CDS, or Cell Directory Service 15. The naming service is used by application servers to store their location and interfaces, known as server bindings. The cell typically includes one or more other server machines that provide other services of the distributed computing environment. These other services include, without limitation, a Security Service 18, which facilitates authentication, and an Event Recording Service 20, which is a DCE service that application developers may use to record application events.

In a known DCE implementation, events are of several types. "Service" events typically include such things as error messages, warnings, abort messages and generic resource information. Another type of event is an "audit" event. Known DCE implementations include a Serviceability (SVC) interface and an Audit interface within the Event Recording Service 20 for processing these events. The SVC and Audit interfaces allow recording of events.

In accordance with the present invention, and as will be described in more detail later, calls to the Serviceability and Audit interfaces within the Event Recording Service 20 are automatically provided via remote procedure calls (RPC's) to an Event Management Service (EMS) 22, which is also a server called "emsd," to facilitate asynchronous event management of events by and among so-called "event suppliers" and "event consumers." The EMS 22 may also be reached by being called directly. For convenience, the passage of events through the SVC or Audit interfaces is sometimes referred to a first level or "supplier-side" event filtering. Generally, an event supplier is a DCE-based application (including DCE core servers) which emits events. An "event" refers to the change of state of some managed resource and is embodied in the data transmitted between an event supplier and EMS, and between EMS and one or more event consumers. Such event data consists of an event header, and a list of event attributes which contain event type specific data. In one implementation, all DCE applications that use the SVC or Audit interfaces of the Event Recording Service 20 are event suppliers. An "event consumer" is any DCE server application which registers with the EMS 22 (as will be described) to receive and process events from one or more "event suppliers."

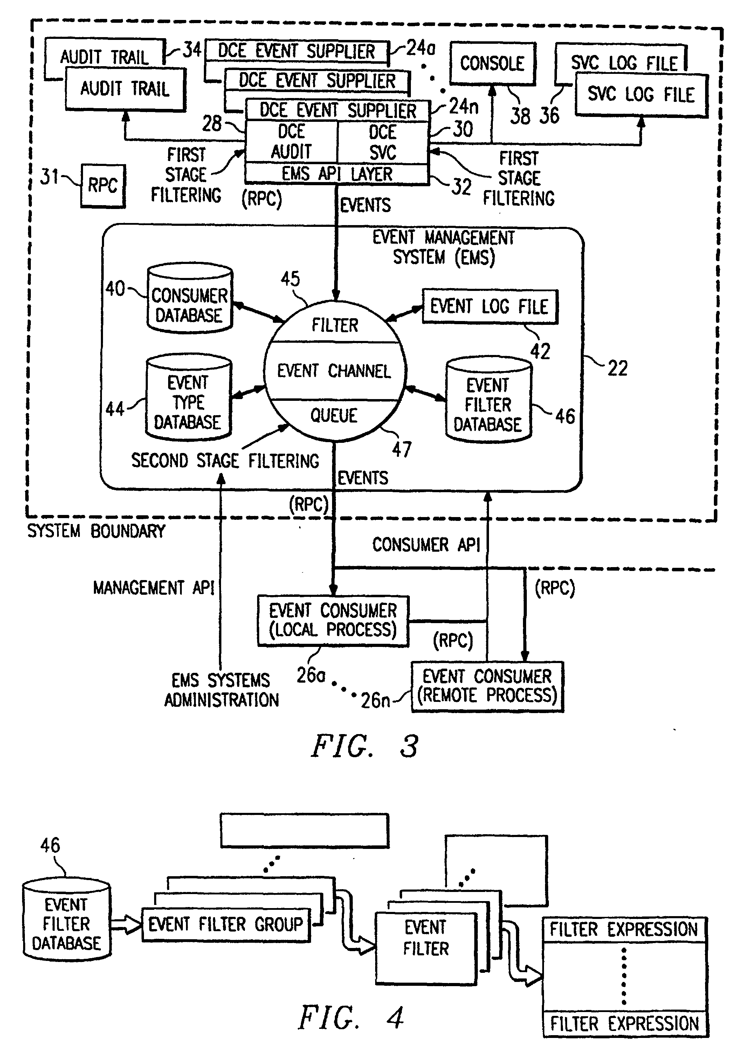

Turning now to FIGURE 3, a diagram is shown illustrating one preferred embodiment of the event management service of the present invention within an existing DCE system. The DCE subsystems and functionality are illustrated and include the DCE SVC and Audit interfaces 28 and 30, and remote procedure call (RPC) mechanisms 31. An EMS Application Programming Interface (API) 32 may be used by event supplier(s) to reach the Event Management Service 22. EMS 22 acts as an "event channel" to uncouple one or more event suppliers 24a-24n from the one or more event consumers 26a-26n. Communications through the event channel are "asynchronous" in that they may be provided to the event consumers at any time. Event consumers may be local or remote processes as shown. Communications between event suppliers and the EMS, on the one hand, and between the EMS and event consumers, on the other hand, are carried out using remote procedure call mechanisms of the DCE system. The portion of the drawing within the dotted line reflects (for representative purposes only) a single host computer of the distributed computing environment on which the EMS 22 and the plurality of DCE event suppliers 24 reside. The Event Recording Service 20 includes audit trails 34, SVC log files 36 and a console 38 where management functions are carried out.

As will be described in more detail below, the Event Management Service includes a number of databases and memory structures: a Consumer Database 40, an Event Log File 42, and Event Type Database 44, and an Event Filter Database 46. In order to start receiving events, it is preferred that an event consumer must first register with EMS 22. One representative technique for registering an event consumer includes providing the event consumer with a handle describing a connection to the event service and then having the consumer use that handle to issue an RPC to EMS. EMS then places an entry in the Consumer Database 40 that uniquely identifies the consumer. A "supplier" registers with the event management service by receiving a handle. The registration process thus defines a connection to a specific EMS process running on a specific machine. Although not required, registration may also involve having the event consumers and event suppliers authenticate themselves with the DCE Security Service (not shown).

Consumers that have registered with EMS are identified in the Consumer Database 40. The Event Log File 42 stores a collection of events to be sent to event consumers. The event log stores events in case EMS cannot forward events to all appropriate event consumers (*e.g.,* because network connections are down). An event is deleted from the event log after that event is forwarded to all relevant consumers.

Before the event consumer can receive event data, however, it must also define a "filter" which EMS then uses to determine whether particular events from the one or more event suppliers gets passed to that event consumer. Initially, the event consumer uses general *"event type"* information in the Event Type Database 44 to create an particular *"event filter group"* for that consumer. As will be seen, the information in the Event Type Database 44 is also used by event suppliers and, possibly, an EMS administrator. The filter data selected or specified by an event consumer is then stored in the Event Filter Database 46.

Event Type Database 44 stores information used by EMS and event suppliers and consumers to generate *"event types*," each of which are a class of events that have the same *event type format.* An event type format is described via an *"event type schema*" and identified by a unique universal identifier (UUID). An event type schema is a description of an event type and consists of a list of *attribute name*/*type* pairs which specify the data format of an event. An *attribute* name is a string that uniquely identifies an attribute of a given event type. An *attribute type* is the data type of an event attribute, which defines the format of the data in the attribute. Event type schema data (stored in database 44) and/or event header information is used by an event consumer to construct an "*event filter group"* to tell EMS which events to forward to that consumer.

Referring to FIGURE 4, an event filter group is a collection of one or more *"event filters"* which are logically ORed together. There is one event filter group per registered event consumer. An "*event filter*" is a collection of one or more "*filter expressions"* which are logically ANDed together, and each event filter has an event *filter name* and event type (which may be generic). As many event filter names as desired can be added to a consumer's event filter group to control what events EMS will send to that consumer. The event filter names are listed in the Consumer Database. An event "filter expression" is preferably a 3-tuple consisting of the attribute name, the attribute value, and an *attribute operator* which defines a compare operation. The attribute operator in a filter expression is used to effect the comparison between the named attribute in the event and the attribute value. The attribute name in a filter expression may refer to an attribute name in an event type schema or header information. Thus, for example, if the header information includes time-stamp information, the event filter group may contain a filter having an event filter expression that refers to time-stamp information in the header.

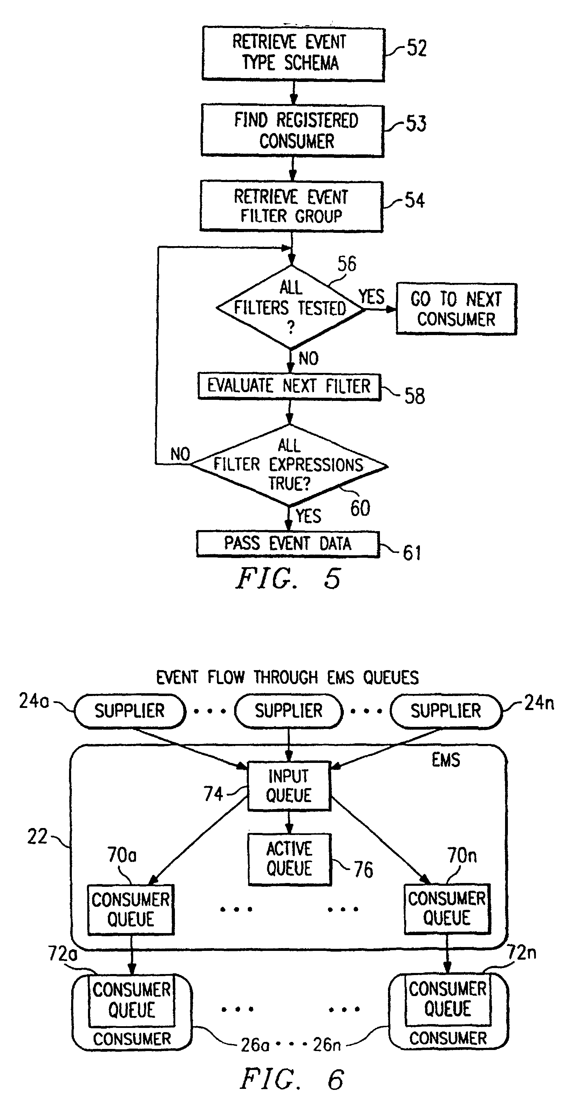

Referring back to FIGURE 3, to reach EMS an event passes through the Event Recording Service to EMS or EMS is called directly. Once the event arrives at EMS via a remote procedure call (RPC), it is stored in the Event Log 42. EMS 22 then performs a parsing operation to determine whether the event gets passed on to any event consumers. The information stored in the Event Filter Database 46 is a second stage or "consumer-side" EMS filter 45 that EMS 22 uses to make this evaluation. The second state filtering process is also illustrated in the flowchart of FIGURE 5. After filtering, a queueing mechanism 47 is used (as discussed below) to control the flow of events to the interested consumers. After the event is forwarded to all interested consumers, it is deleted from the Event Log 42 (and the queues).

The filtering routine begins each time an event reaches EMS. At step 52, EMS retrieves the event type schema for the particular event from the Event Type Database. At step 53, EMS 22 goes through the list of registered event consumers in the Consumer Database 40. For each registered consumer, the following processing occurs. At step 54, the registered consumer's event filter group is first retrieved from the Consumer Database. As described above, each event filter group refers to a collection of one or more filters, each of which include a list of one or more filter expressions. A parser protocol is then initiated. In particular, at step 56, the routine determines if all filters in the event filter group have been evaluated. If not, the routine continues at step 58 by evaluating a next filter in the event filter group. Within each filter, the routine looks at each filter expression. A test is then performed at step 60 to determine if all of the filter expressions within a particular filter are a predetermined condition, namely TRUE. If so, the routine passes the event to the RPC mechanism for delivery to the registered event consumer (step 61). If the outcome of the test at step 60 indicates that any one of the filter expressions in the filter is FALSE, then the routine returns to step 56 to obtain a next filter in the event filter group (as identified by a next event filter name). If the outcome of the test at step 56 indicates that all filters of the consumer's event filter group have been evaluated, the routine ceases and EMS goes on to the next consumer. Thus, according to the parser, unless all filter expressions in a particular filter of an event filter group are TRUE, the event is not forwarded by EMS to the event consumer.

Referring briefly back to FIGURE 3, an event consumer may use the Consumer API to define a new event filter and add it to an event filter group. A consumer may also obtain a list of existing event filter names and add one of those event filter names to an event filter group. Event filter names (and thus filters) can be added or deleted from event filter groups by the consumer (through the Consumer API) as well as by an EMS administrator through a Management API as shown. Thus, the event consumer may modify the event filter group to add or delete new filters.

Event type schemas stored in the Event Type Database are preferably used in several different ways. A consumer can request a list of supported event types and pick which event types it wants to receive by using the event type schemas to construct event filters. An event consumer also can map events according to attribute names. Event suppliers use event type schemas to define new event types they intend to produce. EMS uses event type schemas to apply event filters to events.

In many cases, multiple event consumers are interested in the same events, yet event consumers may not be able to consume events as fast as they are transmitted from the service. In addition, it is desired that when sending an event, suppliers should not be blocked while trying to forward the event to EMS, and the event service should not be blocked while attempting to forward the event to the interested consumers. To achieve these goals, the Event Management Service implements the queueing mechanism 47 which comprises queue defining data structures and a set of queue manipulation routines. These routines preferably use another existing DCE service, DCE Threads, to provide event queue management for the DCE Event Management Service. As is known in the art, threading allows multiple routines conceptually to run simultaneously and to share resources. The DCE Threads service is a set of routines that can be used to create a multi-threaded program. Multi-threading is used to improve the performance of a program by allowing pieces of the program to operate concurrently. DCE Threads is a user-level (nonkernel) threads package based on the PTHREADS interface specified in "Draft 4 Of The POSIX 1003.4 Standard,".

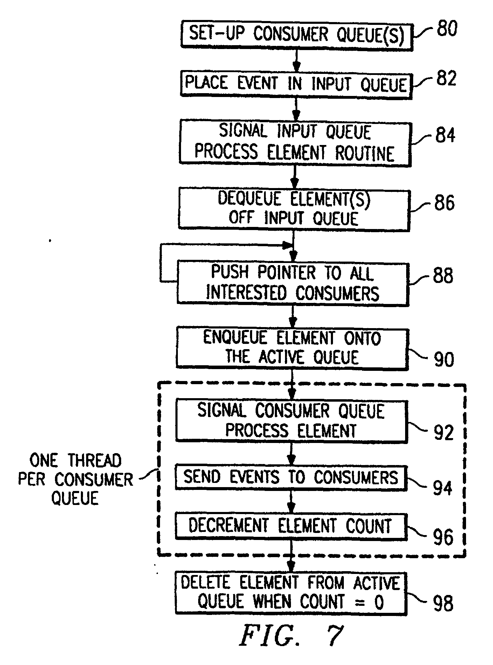

This event queue mechanism is now generally described with reference to FIGURE 6. Whenever an event consumer registers with the EMS 22, a *consumer queue* 70a for that consumer is established within EMS. As seen in FIGURE 6, the consumer process also has a corresponding event queue 72a. The event service maintains two queues, an *input queue* 74 and an *active queue* 76. Each queue has a number of queue elements, and each queue element can have one of two types of data: a pointer to an event, or a pointer to another queue element. The active queue 76 of EMS has elements pointing to events that have not been sent to all interested consumers (i.e. those that have registered to receive the event in question), with each queue element corresponding to one event. Each queue element in the active queue also has a mutex protected count of how many relevant consumers have yet to receive the event. The consumer queues 70 of EMS have elements that contain pointers to elements in the active queue 76. Suitable routines of the queue mechanism are used to create and initialize a queue, to destroy a queue, to enqueue (e.g., "push") an element on a queue, to dequeue (e.g., "pop") an element off a queue, to delete an element from a queue, and to activate a queue (after restoring it).

Referring now to FIGURE 7, the queue management routine is now described in detail. The routine begins at step 80 by setting up a consumer queue 70 for each registered event consumer. When an event is sent to EMS 22, it is immediately placed on the input queue 74, and the RPC routine returns. This is step 82 in FIGURE 7. A routine of the queue mechanism (called input queue process element), which is running in a separate DCE thread, is then signalled at step 84. This indicates that the input queue 74 is not empty. At step 86, each element is dequeued from the input queue 74. If any consumer is interested in the event that the element points to, then a pointer to that element is enqueued onto that consumer's queue 70 (in the EMS) at step 88 and a count associated with the element is incremented (to indicate that another event consumer is registered to receive the event). At step 90 (after the consumer queues 70 of the interested consumers have been updated to receive pointers), the queue element for the event is then pushed onto the active queue to wait for all the consumers to receive the event. At this time, the count represents the number of relevant event consumers (namely, those who want notice) who EMS must then notify of the event.

When an element is enqueued onto one of the consumer queues 70 (of the EMS), the thread running the consumer queue process element routine is signalled, as indicated at step 92, and that routine pops the element off the queue and sends it to the associated consumer queue at step 94. Once sent, the count associated with the queue element (in the active queue) is decremented at step 96. If the count reaches zero, all interested consumers have been notified and the queue element is deleted from the active queue as indicated at step 98.

Each of the steps 92, 94 and 96 are carried out in a distinct thread, and thus multiple instances of these steps occur simultaneously (at least conceptually) with respect to the consumer queues. When all threads have been successful in sending the particular event, the event is deleted from the active queue (and the Event Log 42).

As noted, each consumer process also has an event queue 72 as seen in FIGURE 6. When an event is sent to the consumer, the event is put on this queue, and a signal is sent to the process element routine, which in turn pops elements off the consumer queue 72, and calls an event handler routine to retrieve the event.

The event management service as implemented in an OSF DCE will now be described in more detail. As noted above, the DCE EMS manages event services in a DCE cell. EMS preferably consists of two major parts, the emsd server and the API to access event services. The **emsd** is a DCE server which may reside on every DCE host in the cell from which consumers will request events. It is also envisioned that **emsd** runs in a distributed fashion. Three interfaces are exported by **emsd** to support EMS suppliers, consumers and event services administration. The EMS API provides an interface to the same three interfaces for use by EMS clients.

The following sections describe in detail how EMS works along with a description of how to define event types, the event flow through EMS, how event filters work, how events get logged, and the security model used to protect both event data, and event filter definitions.

### Event Flow Description

As noted above, EMS sets up an event channel to decouple the communications between the supplier and consumer. In order to start receiving events, preferably an event consumer first registers with EMS, then sets-up an event filter group to tell EMS which events to forward to that consumer. Before a supplier can send an event to EMS, the event typically passes through the first stage event filter. In this embodiment, first stage filtering is achieved at the supplier level by using SVC and Audit facilities. Once the event passes through the first stage filter, it is sent to EMS. EMS writes the event to the EMS Event Log in order to save the event in case the event cannot be immediately delivered.

Once the event reaches EMS, it passes through the second stage filter before being forwarded to interested consumers. Preferably, this is achieved by having EMS go through the list of registered consumers and use the event type schema from the Event Type Database, the consumers event filter group from the consumer Database, and the event filters from the Event Filter Database to determine for each consumer if this event passes through to be forwarded on. After all appropriate consumers receive the event, then the event is removed from the event log.

### Event Type Definition

The format of EMS event types preferably are defined by event type schemas, and are kept in the EMS Event Type Database. The event type schemas typically consist of a list of attribute names along with the attribute type which specifies the data format of the data associated with that attribute. Each event is associated with a fixed header part and a variable length data part. The variable length data part preferably consists of N self-defining data items which consist of an attribute type, then the data itself. The data elements in the variable length part correspond in order, one for one with the list of attribute name/type pairs defined in the event type schema. The variable length part can have additional unnamed data items at the end of the named data items (i.e. the data items that have attribute names).

### Generic Event Types

EMS supports events with type *Generic.* Generic events do not have an event type schema. The only way to define filters for generic events, is to use filter expressions with event header attributes.

### Default Event Types

The following is the definition of the SVC and Audit event attribute lists which are contained in their event type schemas:

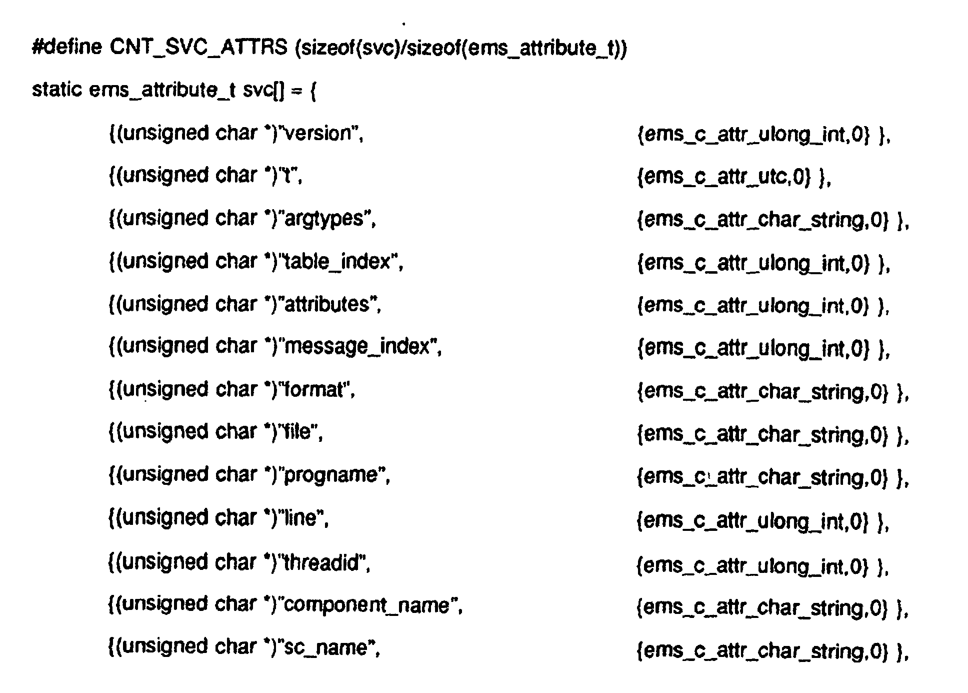

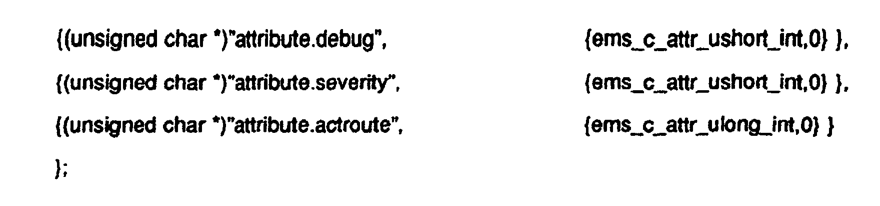

Several constants have also been defined to use to match against the *attribute.severity* attribute. They are:
◆ SVC_C_SEV_FATAL
◆ SVC_C_SEV_ERROR
◆ SVC_C_SEV_WARNING
◆ SVC_C_SEV_NOTICE
◆ SVC_C_SEV_NOTICE_VERBOSE

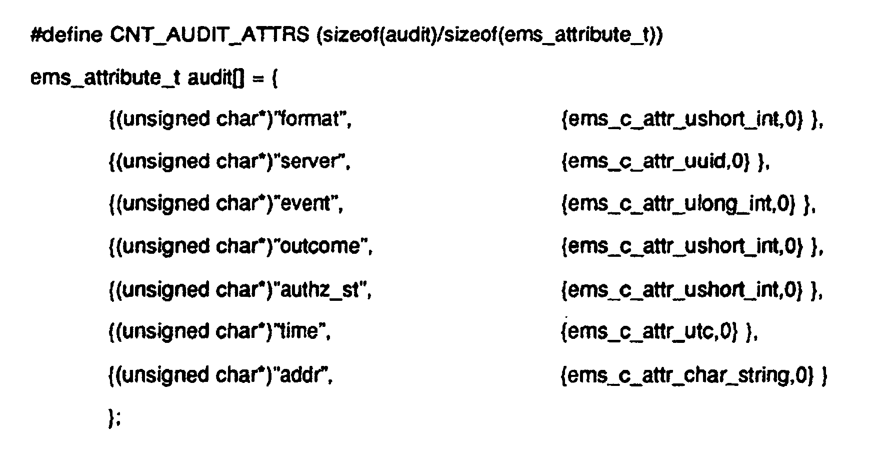

### Event Filters

EMS supports the concept of two stage filtering. First stage filtering is applied on the machine that the supplier is running on to filter out events before they are even sent to EMS. Second stage filtering is applied by EMS to events received from suppliers. This stage controls which events get forwarded on to consumers.

The following sections describe the two stages of filtering EMS supports as well as how to define and organize the event filters.

### First and Second Stage Filtering

In one embodiment, SVC and Audit event types are supported. The first stage filter for SVC events are the SVC routing destination. SVC messages that are routed to EMS will be sent through the EMS event channel. For Audit, audit records that pass through the audit filter mechanism are sent through the EMS event channel.

The second stage filter is defined per EMS consumer. This stage associates an event filter group with each event consumer, and that consumer only receives events that pass through one of the entries in the consumer's event filter group.

### Defining Event Filters

A typical scenario of how an event consumer would start interfacing with EMS would be for the consumer to first query EMS about what event types are supported. From that list of event types, the consumer could then query the event type schema, to construct any event filters for that event type. The event type schemas preferably contain the list of attribute names, and attribute types which the consumer would use to construct an event filter. The consumer would then tell EMS to apply the constructed event filter to incoming events by adding it to the consumer's event filter group.

EMS filters may be constructed at several different levels. The lowest level is the filter expression, which typically is a 3-tuple consisting of an attribute name, attribute operator, and an attribute value which defines a compare operation. All compare operations evaluate to a boolean value. Only certain attribute operators are allowed on certain attribute types.

The following are some examples of a filter expression:

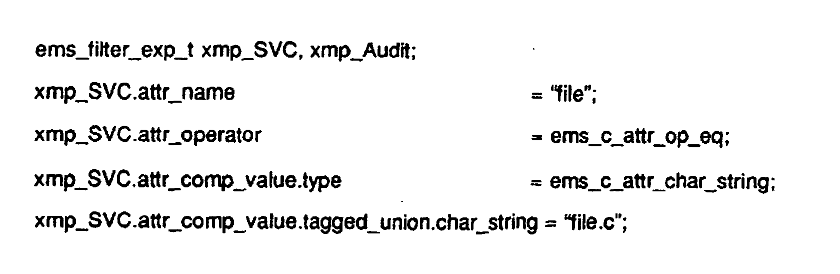

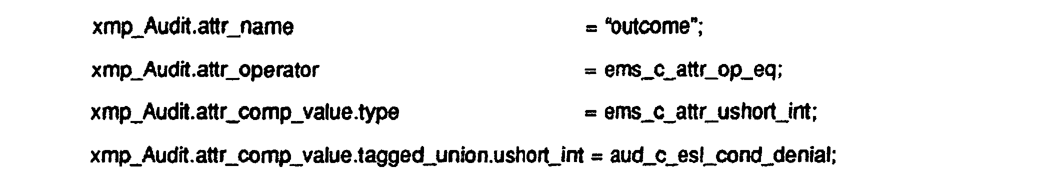

The first example will evaluate to TRUE if the attribute name "file" of an SVC event type is equal to the string "file.c". In the second example, the filter expression xmp_Audit will evaluate to TRUE if the attribute name "outcome" of an Audit event type is equal to the attribute value aud_c_esl_cond_denial, which means that an Audit event is recording that access was denied for some action.

An event filter typically is made up of a list of filter expressions that are added together. An event filter has both a name, and an event type. The event filter name is used to refer to the event filter in event filter create, delete and update operations. The event filter name is also used by consumers and EMS administrators to add event filters to an event filter group.

A consumer's event filter group preferably is a collection of one or more event filter names. For an event to pass through a consumer's filter group, the event filter associated with each event filter name specified in the event filter group is applied to the event. If all the event filter expressions in the named event filter evaluate to TRUE, then the event is forwarded by EMS to that consumer (because of the logical AND operation). If any of the event filter expressions evaluate to FALSE, then the event filter specified by the next event filter name in the event filter group is applied to the event. If none of the event filters in the event filter group evaluate to TRUE, then the event is not forwarded to that consumer.

### Filtering on Header Information or Event Type

A predefined set of event header attribute name/type pairs have been defined to allow filtering on the information in the event header. Filter expressions with event header attributes can be part of filters with event type specific header attributes. Filters with type Generic, however, can only have filter expressions with header attributes.

### EMS Event Log

The EMS event log is used to store events in case of EMS failures. EMS writes all events to the event log, and deletes the event record once the event has been transmitted to all consumers that are supposed to get the event.

The event log is kept in a file on the machine where **emsd** is running. Events are stored in a directory specified by the environment variable EMS_EVENTLOG_DIR. An API is provided to examine local event logs.

### EMS Security Model

EMS provides for secure manipulation of data in the EMS databases. This includes the Event Filter Database, the Event Type Database as well as the list of consumers in the Consumer Database. EMS also provides for supplier and consumer authentication and authorization as well as secure transmission of event data. All access control lists (ACL's) are associated with names in the DCE namespace, and the **emsd** server manages the namespace past the junction:
**/.:/hosts/<hostname>/ems-server/**

The ACL associated with this object will control access to the emsd server registered in this namespace. The permissions associated with ems-server:

**Table 1:**

| **emsd Server Permission Bits** | | |
|---|---|---|
| Permission bit | Name | Description |
| c | control | Modify the ACLs on the server |
| r | read | Read the attributes for this server |
| s | stop | Stop the EMS server |
| w | write | Modify the attributes on this server |

Three security objects are maintained under the ems-server junction. The directories and the databases they represent are:
- event-types: Event type Database
- filters: Filter Database
- consumers: Consumer Database
Each of these databases has an ACL associated with it.

### Event Type Security Management

The Event Type database is represented by the following name in the DCE name space:
**/.:/hosts/<hostname>/ems-server/event-types**

The ACL associated with this object controls access to this database. The permissions associated with event-types are:

**Table 2:**

| **Event Type Database Permission Bits** | | |
|---|---|---|
| Permission bit | Name | Description |
| c | control | Modify the ACLs on the server |
| d | delete | Delete an event type schema |
| i | insert | Add an event type schema |
| r | read | Read the contents of event type schemas |

EMS event data access can be granted per event type. Authority on event data of a given event type can be granted by modifying the ACL on:
**/.:/hosts/<hostname>/ems-server/event-types/<event_type_name>**
where *<event_type_name>* is the event type name which appears in the event type schema. The following names are recognized for SVC and Audit events:
**/.:/hosts/<hostname>/ems-server/events/SVC**
**/.:/hosts/<hostname>/ems-server/events/Audit**

The permissions associated with *<event_type_name>* are:

**Table 3:**

| **Event Type Permission bits** | | |
|---|---|---|
| Permission bit | Name | Description |
| c | control | Modify the ACLs on the event type |
| d | delete | Delete this event type |
| r | read | Read (Consume) an event of this type |
| w | write | Write (Supply) an event of this type |

A supplier's access rights may be verified on the first event sent to EMS, and the consumer's access rights may be verified before forwarding events to that consumer. Authenticated RPC is used to access the EMS supplier and consumer Remote API.

### Event Filter Security Management

The Filter Database is represented by the following name in the DCE name space:
**/.:/hosts/<hostname>/ems-server/filters**

The ACL associated with this object controls access to this database. The permissions associated with filters are:

**Table 4:**

| **Filter Database Permission Bits** | | |
|---|---|---|
| Permission bit | Name | Description |
| c | control | Modify the ACLs on *filters* |
| d | delete | Delete an event filter |
| i | insert | Add an event filter |
| r | read | Get a list of or the contents of event filters |

Event filter access control is granted per event filter. Authority on filter access for a given event filter is granted by modifying the ACL on:
**/.:/hosts/<hostname>/ems_server/filters/<filter_name>**
where *<filter_name>* is the event filter name given to the event filter on the call to *ems_filter_add.*

The permissions associated with event filters are:

**Table 5:**

| **Event Filter Permission Bits** | | |
|---|---|---|
| Permission bit | Name | Description |
| c | control | Modify the Acl on the event filter |
| d | delete | Delete the event filter |
| w | write | Modify the contents of an event filter |

When a consumer creates an event filter, that consumer principal automatically gets **dwc** permissions on the created event filter.

### Consumer Security Management

The Consumer database is represented by the following name in the DCE name space:
**/.:/hosts/<hostname>/ems-server/consumers**

The ACL associated with this object controls access to this database. The permissions associated with consumers are:

**Table 6:**

| **Consumer Database Permission Bits** | | |
|---|---|---|
| Permission bit | Name | Description |
| c | control | Modify the ACLs on *consumers* |
| d | delete | Delete a consumer |
| i | insert | Add (register) a consumer |
| r | read | List consumer information |
| w | write | Modify a consumer including his filter group |

### EMS Security Initialization

When EMS is configured, several security groups are created by default. The groups are **ems-admin, ems-consumer,** and **ems-supplier**. The default permissions are:

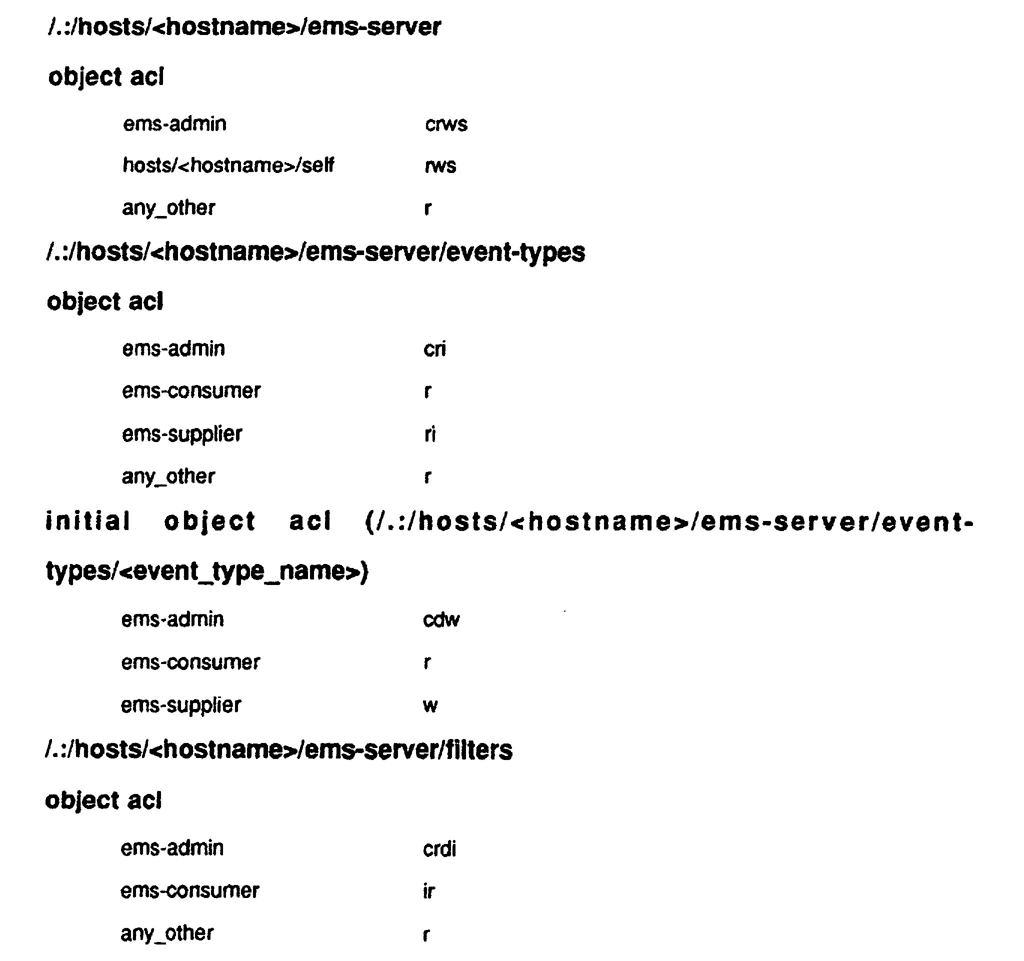

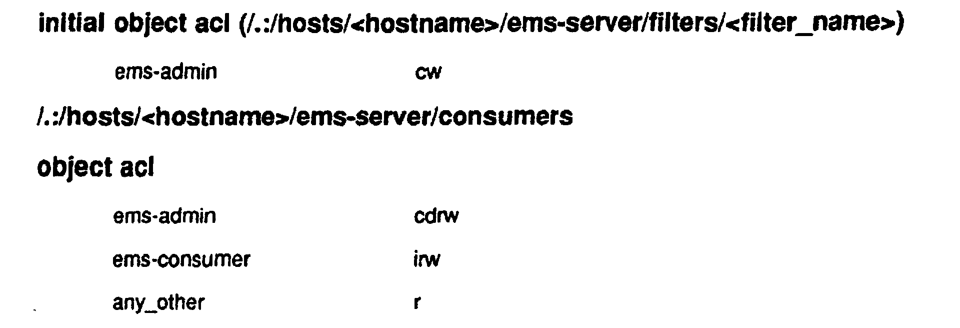

By setting these permissions for the **ems_admin** group, each new event filter and event type created will automatically inherit the same permissions.

Administrators can add principals to each of these groups to give them access to all emd's running in a cell. If tighter security is desired, the group can be removed from the respective ACL, and principals can be added.

When transmitting events of type Audit, EMS preferably will use authenticated RPC set to DCE Security Protection Level strong integrity **(rpc_c_protect_level_pkt_integrity)**.

### Writing Consumers

Preferably, event consumers are not simple clients but rather are implemented as servers. This is not required, however. Each EMS consumer will likely have certain requirements: calling *consumer_start,* registering an event handler, registering with the various **emsd**'s that the consumer desires to receive events from, setting-up event filters, and calling *rpc_server_listen*.

The call to *consumer_start* creates the consumer uuid, and then registers the EMS Transmit to Consumer handler. The call to *ems_consumer_handler_register*, sets up an incoming consumer queue, and initializes the event handler function to call the handle function specified. One event consumer can register to receive events from multiple emsd servers on different hosts. Consumers must set up event filters before any events will be sent. Finally, it is up to the consumer to call rpc_server_listen to wait for incoming events.

### EMS Recovery After Restart

EMS stores all state data in the following repositories

### Consumer Database-

Contains a list of all suppliers, and all consumers as well as the list of filters in the consumer filter group.

### Event Type Database-

Contains the schemas for all the known event types.

### Event Filter Database-

Contains all the current filter definitions.

When an **emsd** is restarted, the following steps are performed:
1. All databases get restored
2. All consumers are told to reregister or reconnect
3. The event queue is restored from the event log files
4. event transmission proceeds

### Event Queue

An event queue contains the following features:

**Empty and full condition variables.** These variables wait until the queue is not Empty or not full respectively. They can be turned on and off if required.

**queue mutex.** Used for pushing and popping elements onto the queue to provide multithreaded access to a queue.

**process element routine.** This is a user written routine with a defined signature which is called to process queue elements. Each queue gets its own thread which calls this routine.

**Maximum queue size.** When the queue reaches this size, it waits on the full condition variable until not full.

**Queue persistence.** Each element on the queue is saved using DCE backing store so if the EMS goes down, the event queues can be restored.

### Event queue elements

Event queue elements can contain two types of data:
- A pointer to an Event
- A pointer to another queue element

This allows EMS to have an active queue with elements pointing to events that have not been sent to all interested consumers, and consumer queues with elements that contain pointers to elements in the active queue. Each element also contains a mutex protected count of how many pointers to that element are active.

### Data Structures

### EMS Event Attributes

### Event Attribute Types

The event attribute type is used to specify the data type of an event attribute. The attribute type specifies what format the data is in in the event attribute value union (*ems_attr_value_t*).

All event attribute types are defined as
**typedef unsigned16 ems_attr_type_t;**

An event attribute type can be one of the following:

**Table 7.**

| **Event Attribute Type Specifiers** | | |
|---|---|---|
| Attribute Type | Data Type | Size |
| ems_c_attr_small_int | idl_small_int | 1 byte |
| ems_c_attr_short_int | idl_short_int | 2 bytes |
| ems_c_attr_long_int | idl_long_int | 4 bytes |
| ems_c_attr_hyper_int | idl_hyper_int | 8 bytes |
| ems_c_attr_usmall_int | idl_usmall_int | 1 byte |
| ems_c_attr_ushort_int | idl_ushort_int | 2 bytes |
| ems_c_ulong_int | idl_ulong_int | 4 bytes |
| ems_c_attr_uhyper_int | idl_uhyper_int | 8 bytes |
| ems_c_attr_short_float | idl_short_float | 4 bytes |
| ems_c_attr_long_float | idl_long_float | 8 bytes |
| ems_c_attr_boolean | idl_boolean | 1 byte |
| ems_c_attr_uuid | uuid_t | 16 bytes |
| ems_c_attr_utc | utc_t | 16 bytes |
| ems_c_attr_severity | ems_severity_t | 4 bytes |
| ems_c_attr_acl | sec_acl_t* | variable size |
| ems_c_attr_byte_string | idl_byte* | variable size |
| ems_c_attr_char_string | idl_char* | variable size |
| ems_c_attr_bytes | see structure | variable size |

Byte strings and character strings are terminated with a 0 (zero) byte. The pickling service of the IDL compiler can be used to encode complex data types into byte strings that are to be included in an EMS event.

### Event Attribute Values

The event attribute value union is a self defining data structure which has an attribute type specifier (type) which tells what type of data is in the union, and then appropriate union members to hold the value of the data specified.

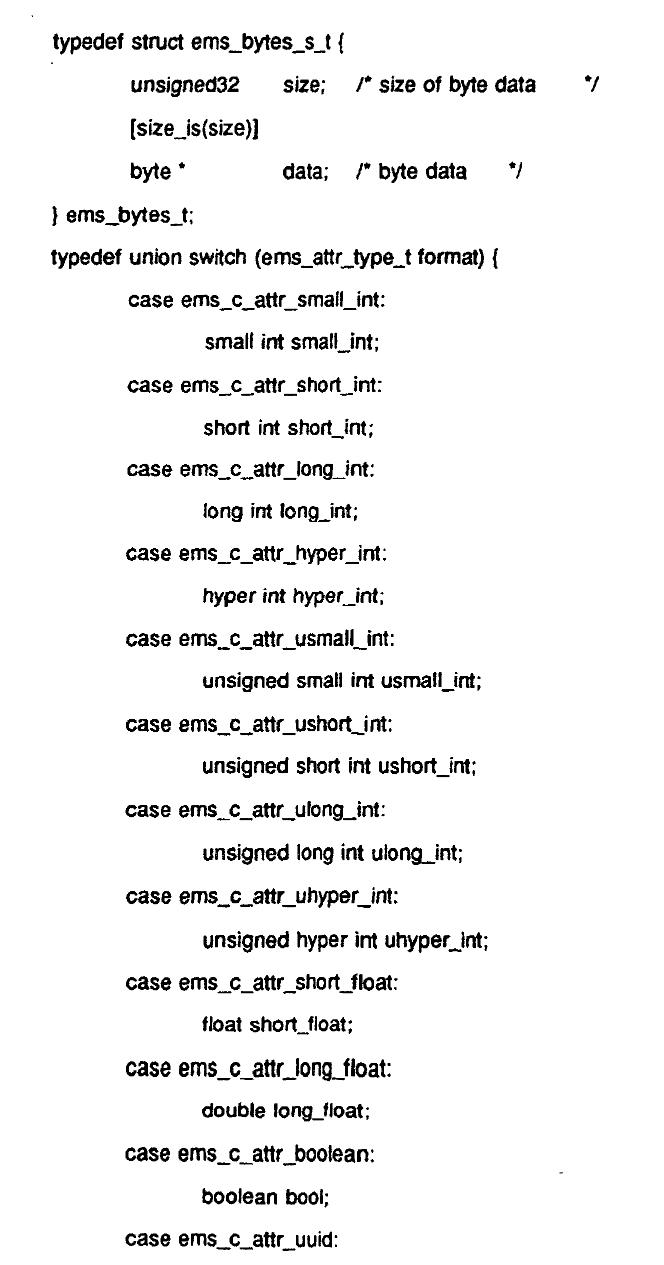

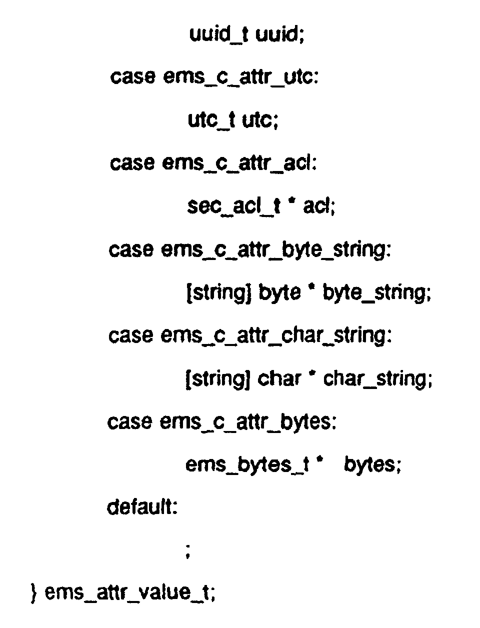

### Event Attribute

Event attributes typically contain an event attribute name/type pair which define an event attribute. Event attributes can be used in defining event types in event type schemas, and in defining event filters in event filter expressions. The *attr_name* specifies the attribute name, and the attr_type specifies the format of the attribute value.

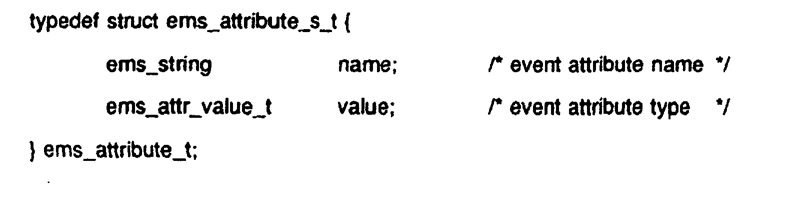

### EMS Event Structure

### Event Type

An event type specifies the unique id for a given event type.

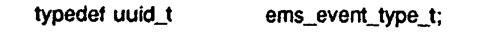

**Table 8:**

| **Default Event Types** | |
|---|---|
| Event Type | Event Type Name |
| ems_c_generic_type | Generic |
| ems_c_svc_type | SVC |
| ems_c_aud_type | Audit |

Events of type *Generic,* do not have event type schemas associated with them, and can only be filtered by expressions with header attributes in them.

### Event Identifier

An event identifier uniquely identifies a given event. Each event normally has both an event type which is unique to all events of this type, and an event id which is unique to a specific event.

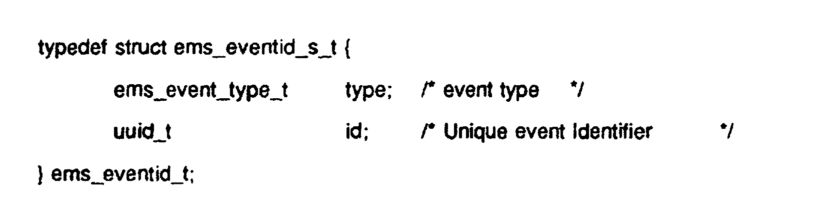

### Network Name

A network name identifies the network name of a given host machine. The name service specifies which name service recognizes the given network name.

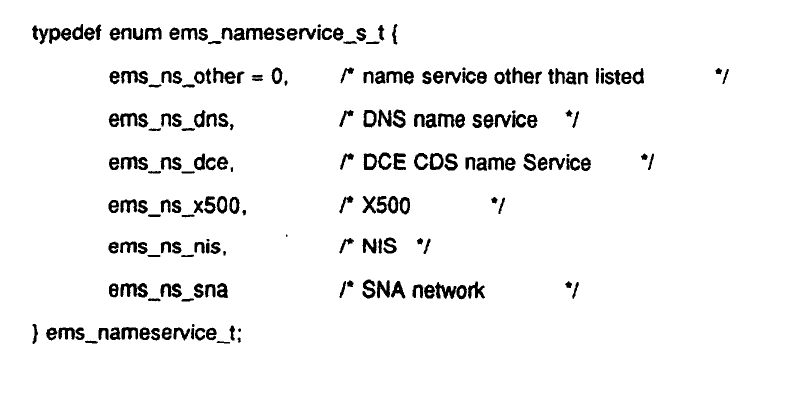

The *ems_netaddr_t* structure specifies the actual network name. It can be interpreted according to the name service specified.

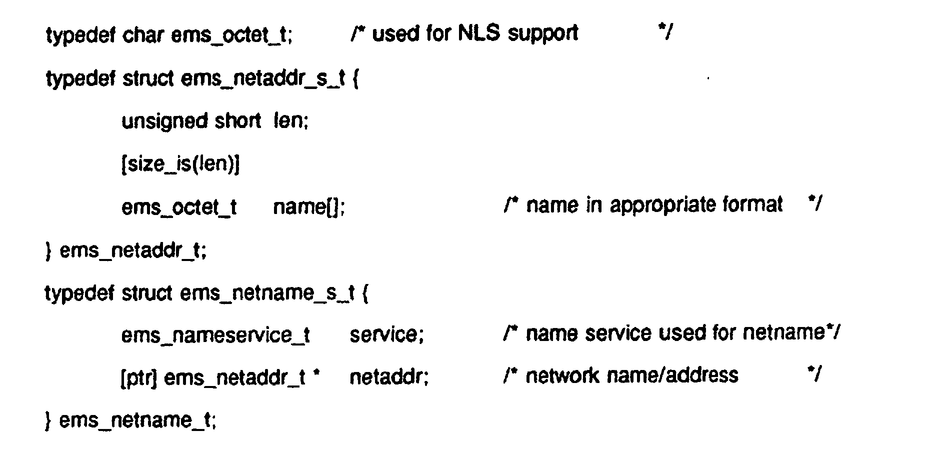

For a DCE hostname, the following example will set the *ems_netname_t* structure:

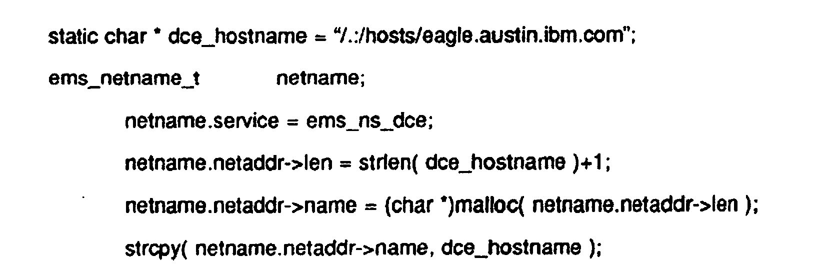

### Event origin

The event origin specifies where the event originated (i.e. the supplier). The origin specifies the *netname* of the host where the supplier is running, the name of the supplier, *descname*, and supplier process identification (*pid, uid, gid*). These values may not be valid for all hosts.

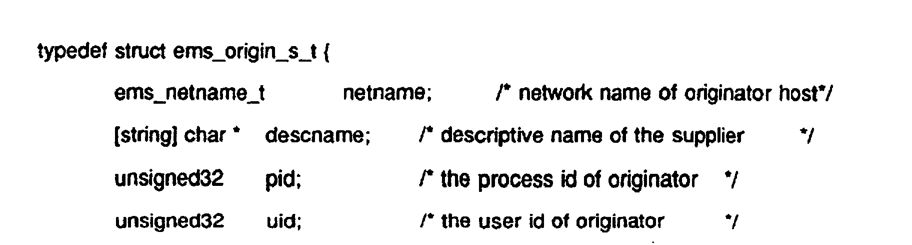

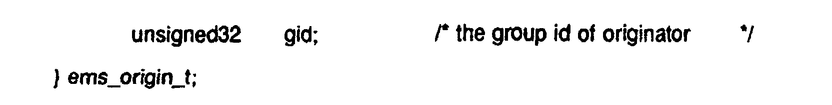

### Event Severity

The event severity specifies the severity of the event. The names have a one-to-one correspondence to DCE SVC severity attribute values:

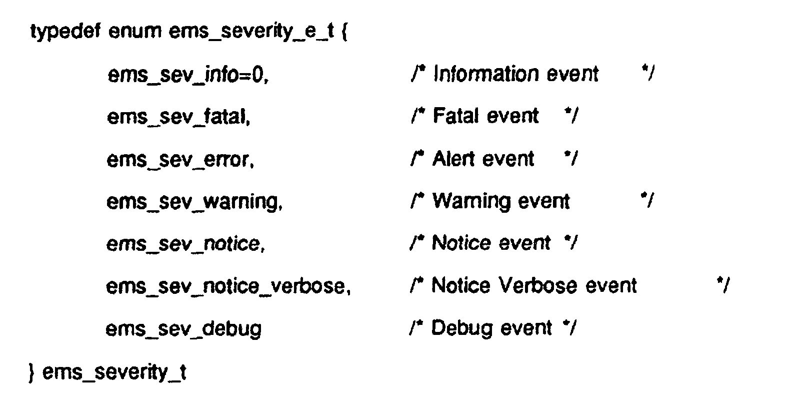

### Event Header

The event header describes the fixed part of the event data structure. The header contains the eventid, the origin of the event, the severity along with the time the event was both received at EMS, and delivered to the consumer.

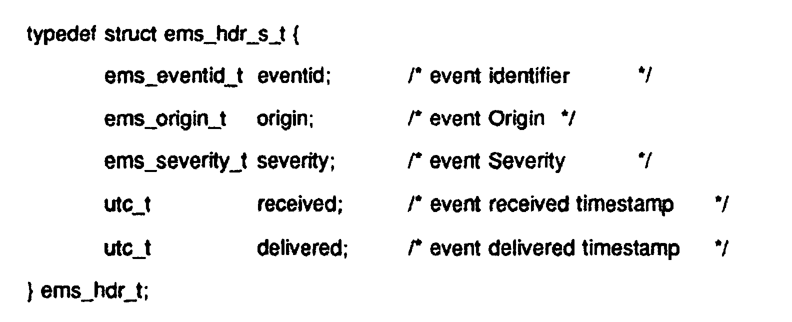

A set of Filter attributes are provided for event header filtering. The following names can be used for the filter attribute in an event filter expressions:

**Table 9:**

| **Event Header Attributes** | |
|---|---|
| Attribute Name | Attribute Type |
| eventid.id | ems_c_attr_uuid |
| eventid.type | ems_c_attr_uuid |
| origin.netname.service | ems_c_attr_ulong |
| origin.netname.netaddr | emc_c_attr_bytes |
| origin.descname | ems_c_attr_char_string |
| origin.pid | ems_c_attr_ulong |
| origin.uid | ems_c_attr_ulong |
| origin.gid | ems_c_attr_ulong |
| severity | ems_c_attr_ulong |
| received | ems_c_attr_utc |

### Event

The *ems_event_t* structure contains a fixed part, the event header, and a variable part, the event data items. Each data item is a self-defining value which contains an attribute type, and attribute date. A count specifies how many data items are in the event.

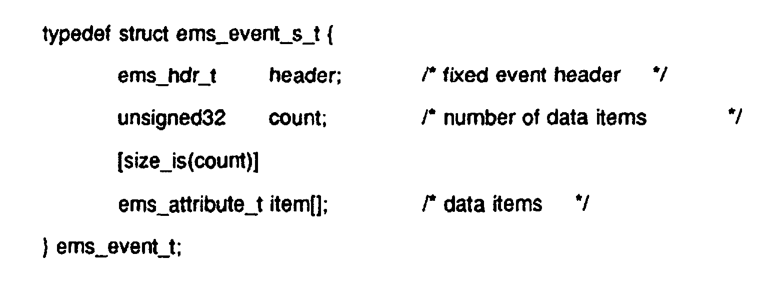

### EMS Event Types

The EMS Event Type structures are used to define the EMS Event types.

### Event Type Schema

The event type schema is used to define an event type. It consists of an event *type* id, type, *a name* field which specifies the name of the event type, and a list of event type attributes describing the format of this event type. Size specifies the number of attributes in an event type. The event type schemas only specifies the fixed part of an event. An event can have as many unnamed attributes following the list of attributes specified here.

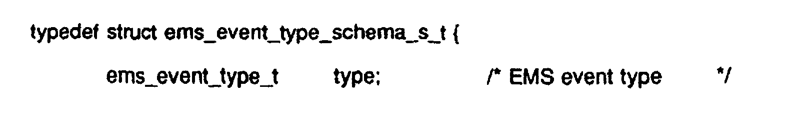

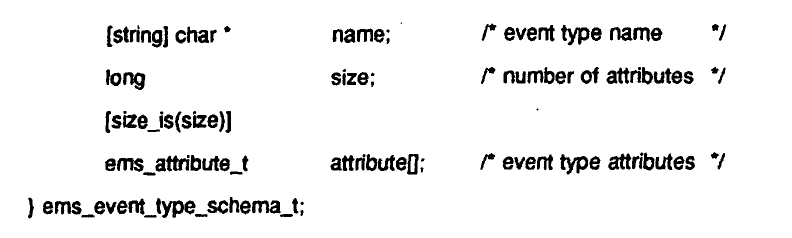

### Event Type List

The event type list contains a list of *size* event type *schemas.*

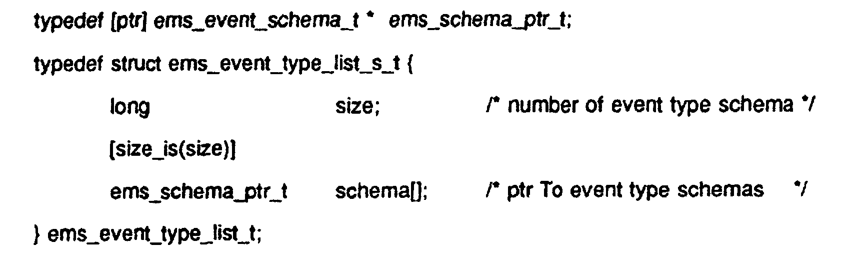

### EMS Event Filters

The event filter data structures allow the definition of both event filters, and event filter lists.

### Attribute Operators

**Table 10:**

| **Attribute Operators** | |
|---|---|
| Attribute Operator | Description of Attribute Operator |
| ems_c_attr_op_eq | TRUE if *attr_name* equal (= =) to *attr_value* |
| ems_c_attr_op_gt | TRUE if *attr_name* greater than (>) *attr_value* |
| ems_c_attr_op_lt | TRUE if *attr_name* less than (<) *attr_value* |
| ems-c_attr_op_ge | TRUE if *attr_name* greater than or equal (> =) to *attr_value* |
| ems_c_attr_op_le | TRUE if *attr_name* greater than or equal (< =) to *attr_value* |
| ems_c_attr_op_ne | TRUE if *attr_name* not equal (< >) to *attr_value* |
| ems_c_attr_op_bit and | TRUE if *attr_name* bitwise anded with *attr_value* is greater than 0 |
| ems_c_attr_op_sub str | TRUE if *attr_name* contains the string value specified by *attr_value* |

Attribute operators define the boolean operation to perform on the attribute name, and the attribute value in the event filter expression. The attribute operator type is defined as:
**typedef unsigned16 ems_attr_op_t;**

### Event Filter Expression

The event filter expression structure contains the elements of an event filter expression that is used to build an event filter. Event filter expressions contain an attribute name, operator, value triplet (*attr_name, attr_operator, attr_value*) which defines a boolean filter expression.

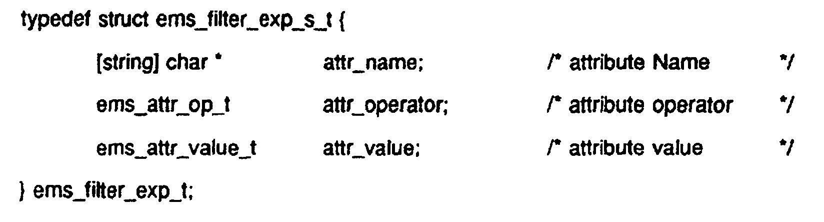

### Event Pilter Expression List

An event filter expression list groups a list of filter expressions together in a list to form an **AND**ed filter expression used in defining an event filter.

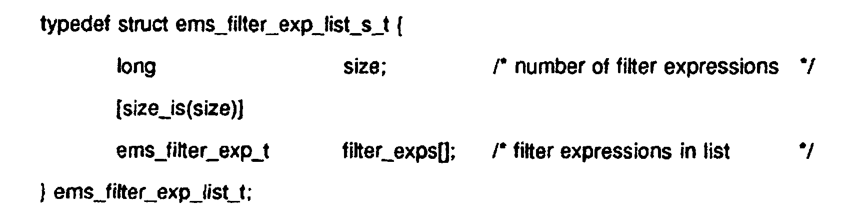

### Event Filter

An event filter specifies a series of event filter expressions that will be **AND**ed together to perform a filter operation. The event filter contains a name (*filter_name*), which will be entered in the CDS name space, and a list of filter expressions (*event_exp_list*).

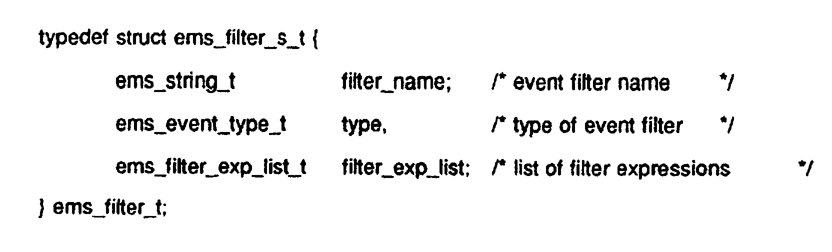

Filters with event type of generic, can only have filter expressions with header attribute names in them.

### Event Filter Name List

An event filter list contains a list of *size event_filter_names;*

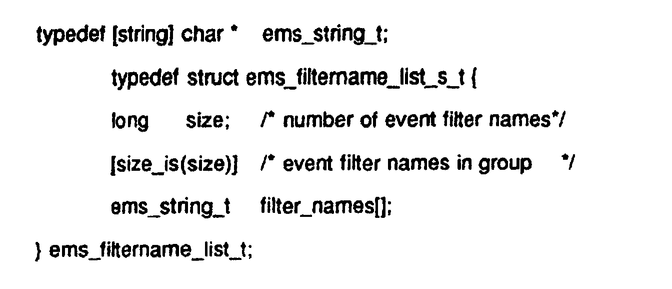

### Event Filter List

The event filter list structure contains a list of size filters.

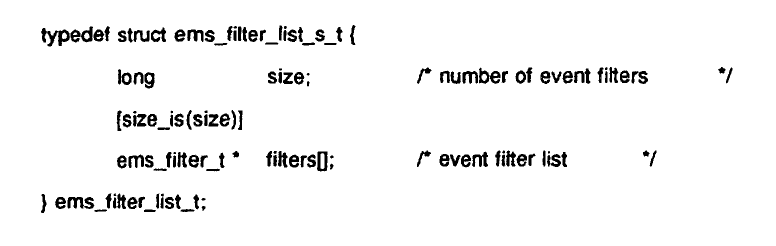

### EMS Consumer Data Structures

### Consumer

The consumer data structure defines an EMS consumer. Each consumer has a *name*, which is entered in CDS, a *hostname* where the consumer is running, and a *uuid* unique to that consumer.

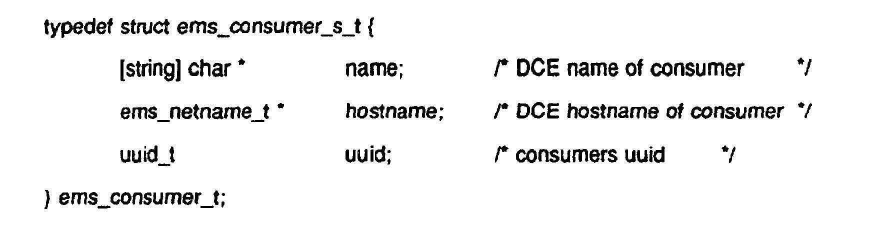

### Consumer List

The consumer list structure contains a list of size consumer entries.

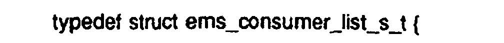

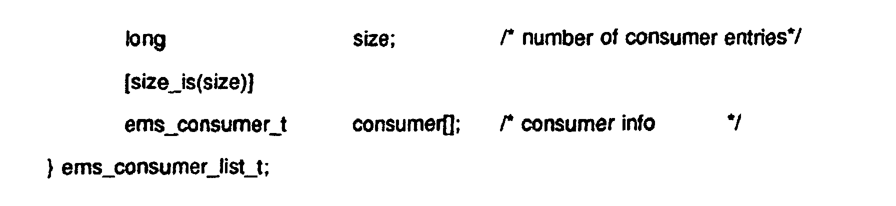

### EMS Server Data Structure

### Attribute List

The attribute list data structure defines a list of server attributes. Each attribute is a value maintained by an **emsd** server, and the attribute list can be used to query and set those values.

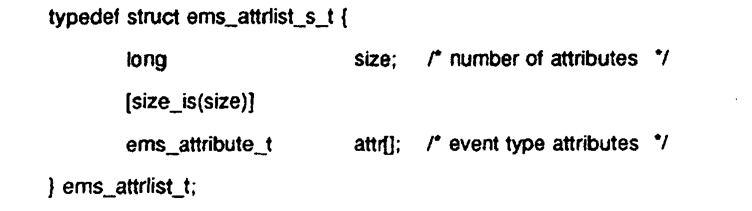

### Application Programming Interface (API)

The following are some representative routines of the EMS API, which implement the RPC interface:

### Register with EMS

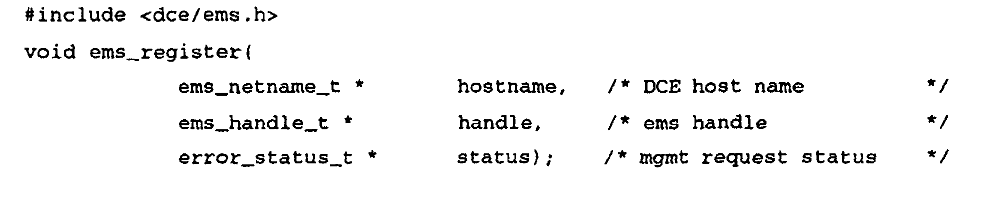

### DESCRIPTION:

This routine registers with EMS, and obtains an EMS binding handle. This routine can be used by a management application that will be using the EMS Management or by event suppliers that wish to add new event types.
Permission required
None
PARAMETERS:
Input
hostname: is the name of the DCE host machine where emsd is running. If the hostname is NULL, then the local host is assumed.
Output
handle: returns an EMS handle to use for future calls to EMS routines.
status: returns the status code from this routine which indicates whether the routine completed successfully or, if not, why not.
The possible status codes and their meaning are as follows:

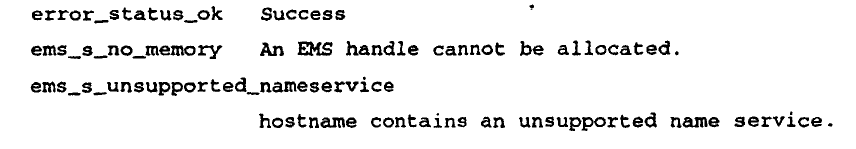

### Remote Supplier Transmit

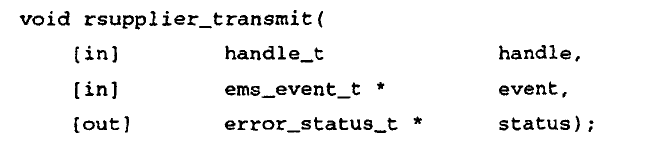

### DESCRIPTION:

Transmit an event to EMS.
Permission required
(w) on /.:/hosts/<hostname>/ems-server/event-types/<type_name>
PARAMETERS:
Input
handle EMS binding handle
event transmitted event
Output
status Returns the status code from this routine which indicates whether the routine completed successfully or, if not, why not.
The possible status codes and their meaning are as follows:
error_status_ok Success
ems_s_no_memory EMS server received an error allocating memory

### Remote Consumer Add Event Filters to a Croup

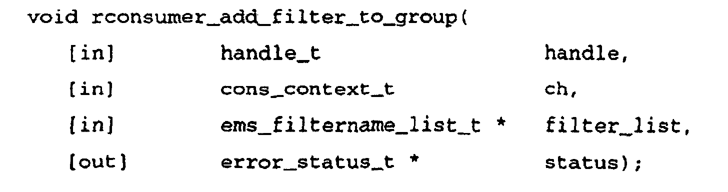

### DESCRIPTION:

Add the event filters named in filter_list to a consumer's event filter group. The consumer is identified by its uuid.
Permission required
(w) on /.:/hosts/<hostname>/ems-server/consumers
PARAMETERS:
Input
handle EMS binding handle
ch Consumer context handle returned by rconsumer_register.
filter_list List of event filter names
Output
status Returns the status code from this routine which indicates whether the routine completed successfully or, if not, why not.
The possible status codes and their meaning are as follows:
error_status_ok Success

### EMS Transmit

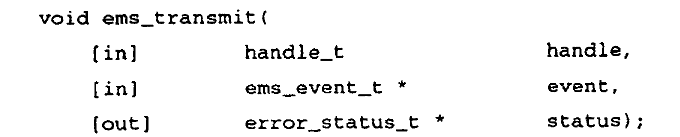

### DESCRIPTION:

Transmit an event from EMS to a consumer.
PARAMETERS:
Input
handle Consumer binding handle
event event
Output
status Returns the status code from this routine which indicates whether the routine completed successfully or, if not, why not.
The possible status codes and their meaning are as follows:
error_status_ok Success

In a preferred embodiment of the event management service described above a set of instructions in a code module is resident in the random access memory of a computer. Until required by the computer, the set of instructions may be stored in another computer memory, for example, in a hard disk drive, or in a removable memory such as an optical disk (for eventual use in a CD ROM) or floppy disk (for eventual use in a floppy disk drive).

Note that although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

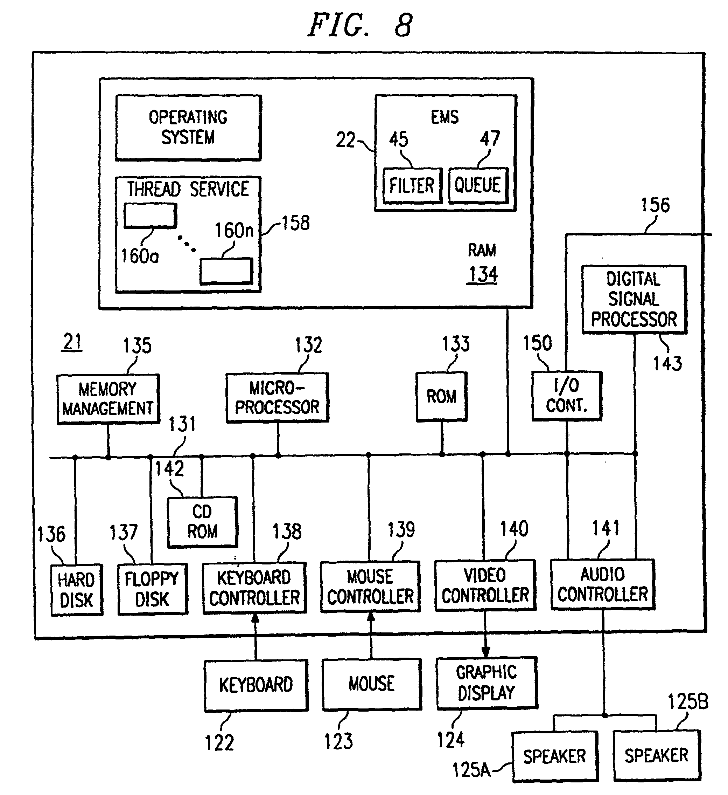

FIGURE 8 shows a block diagram of a representative general purpose computer system. The system unit 21 includes a system bus or plurality of system buses 131 to which various components are coupled and by which communication between the various components is accomplished. The microprocessor 132 is connected to the system bus 131 and is supported by read only memory (ROM) 133 and random access memory (RAM) 134 also connected to system bus 131. The microprocessor may be of the Intel family of microprocessors, including the 386 or 486 microprocessors, or some other microprocessor such as one of Motorola's family of microprocessors (the 68000, 68020 or the 68030 microprocessors) or one of the RISC microprocessors manufactured by IBM, Hewlett Packard, Sun, Intel, Motorola and others.

The ROM 133 contains among other code the Basic Input-Output system (BIOS) which controls basic hardware operations such as the interaction with the disk drives and the keyboard. The RAM 134 is the main memory into which the operating system and application programs are loaded. The memory management chip 135 is connected to the system bus 131 and controls direct memory access operations including, passing data between the RAM 134 and hard disk drive 136 and floppy disk drive 137. The CD ROM 142, also coupled to the system bus 131, is used to store a large amount of data, e.g., a multimedia program or large database.

Also connected to this system bus 131 are various I/O controllers: the keyboard controller 138, the mouse controller 139, the video controller 140, and the audio controller 141. The keyboard controller 138 provides the hardware interface for the keyboard 122, the mouse controller 139 provides the hardware interface for the mouse 123, the video controller 140 is the hardware interface for the display 124, and the audio controller 141 is the hardware interface for the speakers 125a and 125b. An I/O controller 150 such as a Token Ring Adapter enables communication over a network 156 to other similarly configured data processing systems.

As seen in FIGURE 8, the RAM 134 supports the Event Management Service 22 including the filter mechanism and queue mechanism. The Threads Service is identified by reference numeral 158 and includes a plurality of thread process routines 160a-160n.

It will be appreciated that although the invention as claimed has been described primarily with reference to the OSF DCE architecture, it is not so limited, and may be applied to any network environment, whether traditional or object-oriented, and so other operating systems and network architectures.

## Claims

1. A method of managing events in a distributed computing environment wherein one or more event suppliers (24a-24n) generate events to be communicated to one or more event consumers (26a-26n), comprising the steps of:
having an event consumer define an event filter (45) including one or more filter expressions,
the method **characterised by** the steps of:
having the event consumer define an event filter group identifying the event filter, providing the option for said event filter group to identify more than one event filter, wherein at least the event filter includes one or more filter expressions, the event filter group including information determining whether particular events generated by the one or more event suppliers are communicated to the event consumer;
for a given event determining if all event filter expressions of any event filter of an event filter group evaluate to a predetermined condition; and
communicating the given event to the event consumer if all event filter expressions of any event filter of the event filter group evaluate to the predetermined condition.

2. The method of Claim 1 wherein the event filter group includes one or more event filter names identifying the one or more event filters.

3. The method of Claim 1 or 2 wherein each event filter of the event filter group includes one or more filter expressions.

4. The method of Claim 1, 2 or 3 wherein the determining step includes the steps of:
(a) determining whether all event filters in the event filter group have been evaluated (56);
(b) if all event filters in the event filter group have not been evaluated, selecting a next event filter for evaluation (58);
(c) determining whether all of the filter expressions in the next event filter evaluate to the predetermined condition (60);
(d) if all of the filter expressions in the next event filter evaluate to the predetermined condition, communicating the event to the event consumer (61);
(e) if any of the filter expressions in the event filter do not evaluate to the predetermined condition, returning to step (a).

5. The method of any preceding Claim wherein the information is one or more event type schemas each describing an event type and comprising a list of attribute name/type pairs which specify a data format of an event.

6. The method of Claim 5 wherein an attribute name/type pair comprises an attribute name identifying an attribute of a given event type and an attribute type defining the data format in the attribute.

7. The method of Claim 6 wherein each filter expression of the event filter comprises an attribute name, an attribute operator and an attribute value, wherein the attribute operator compares the attribute named in the event and the attribute value.

8. The method of any preceding Claim wherein the information is a header attribute associated with an event.

9. The method of any preceding claim, wherein an event management service (22) identifies whether an event is one of the particular events to be forwarded to the event consumer, said event being associated with a predetermined remote procedure call RPC, and said method further comprising the step of forwarding the relevant events from the event management service to the event consumer.

10. The method of Claim 9 wherein the predetermined RPC is issued from an event recording service (28).

11. The method of Claim 9 or 10 wherein the event is supplied from the event management service to the event consumer using a remote procedure call.

12. The method of any of claims 9 to 12, further including the step of registering (40) the event consumer with the event management service.

13. The method of Claim 12 further including the step of authenticating the event consumer with a security service (18).

14. The method of Claims 12 or 13 wherein at least one of the event suppliers is unaware of the event consumers who have registered with the event management service to receive that event supplier's events.

15. The method of any preceding claim further including the step of saving events in an event log (42).

16. A computer system for providing an event management service in a distributed computing environment in which users can access distributed resources comprising:
event management service means (22) for establishing an event channel through which events are passed from one or more event suppliers (24a-24n) to one or more event consumers (26a-26n); and
means (45) for filtering the events generated by the one or more event suppliers to determine which events are passed to the one or more event consumers, wherein the filtering means comprises:
means for defining an event filter including one or more filter expressions,
the filtering means being **characterised by**:
means for defining an event filter group for each event consumer, the event filter group identifying the event filter;
means for enabling the event filter group to identify more than one event filter, wherein at least the event filter includes one or more filter expressions, the event filter group including information that determines whether particular events generated by the one or more event suppliers are communicated to the event consumer; and
means for determining for a given event if all event filter expressions of any event filter of an event filter group evaluate to a predetermined condition; and
means for communicating the given event to the event consumer if all event filter expressions of any event filter of the event filter group evaluate to the predetermined condition.

17. The computer system of Claim 16 further comprising remote procedure call means (31) for supplying events from the one or more event suppliers to the event management service means, and from the event management service means to the one or more event consumers.

18. The computer system of Claim 16 or 17 further including access control means (18) for authenticating event consumers to receive events from the event management service means.

19. The computer system of Claim 16, 17 or 18 further including event recording service means (20) for providing events from the one or more event suppliers to the event management service means.

20. The computer system of any of claims 16 to 19 wherein each event filter of the event filter group includes one or more filter expressions.

21. The computer system of any one of claims 16 to 20 wherein the means for determining:
means for determining whether all event filters in the event filter group have been evaluated;
means, responsive to determining that all event filters in the event filter group have not been evaluated, for selecting a next event filter for evaluation;
means for determining whether all of the filter expressions in the next event filter evaluate to the predetermined condition; and
means, responsive to determining that all of the filter expressions in the next event filter evaluate to the predetermined condition, for communicating the event to the event consumer.

## Patentansprüche

1. Verfahren zum Verwalten von Ereignissen in einer Umgebung mit verteilter Datenverarbeitung, bei dem ein oder mehrere Ereignislieferanten (24a bis 24n) Ereignisse erzeugen, die an einen oder mehrere Ereignisverbraucher (26a bis 26n) zu übertragen sind, die folgenden Schritte umfassend:
Bewirken, dass ein Ereignisverbraucher ein Ereignisfilter (45) definiert, das einen oder mehrere Filterausdrücke enthält;
wobei das Verfahren durch die folgenden Schritte gekennzeichnet ist:
Bewirken, dass der Ereignisverbraucher eine Ereignisfiltergruppe definiert, die das Ereignisfilter kennzeichnet, wobei für diese Ereignisfiltergruppe die Option gegeben ist, mehr als ein Ereignisfilter zu kennzeichnen, wobei wenigstens das Ereignisfilter einen oder mehrere Filterausdrücke enthält, wobei die Ereignisfiltergruppe Informationen enthält, die festlegen, ob bestimmte Ereignisse, die durch den einen oder die mehreren Ereignislieferanten erzeugt werden, an den Ereignisverbraucher übertragen werden;
für ein Ereignis Ermitteln, ob alle Ereignisfilterausdrücke eines Ereignisfilters einer Ereignisfiltergruppe in Bezug auf eine vorgegebene Bedingung bewerten; und
Übertragen des Ereignisses an den Ereignisverbraucher, wenn alle Ereignisfilterausdrücke eines Ereignisfilters der Ereignisfiltergruppe in Bezug auf die vorgegebene Bedingung bewerten.

2. Verfahren nach Anspruch 1, bei dem die Ereignisfiltergruppe eine oder mehrere Ereignisfilterbezeichnungen enthält, die das eine oder die mehreren Ereignisfilter kennzeichnen.

3. Verfahren nach Anspruch 1 oder 2, bei dem jedes Filter der Ereignisfiltergruppe einen oder mehrere Ereignisfilterausdrücke enthält.

4. Verfahren nach Anspruch 1, 2 oder 3, bei dem der Ermittlungsschritt die folgenden Schritte enthält:
(a) Ermitteln, ob alle Ereignisfilter in der Ereignisfiltergruppe bewertet wurden (56);
(b) Wählen eines nächsten Filters für die Bewertung (58), falls nicht alle Ereignisfilter in der Ereignisfiltergruppe bewertet wurden;
(c) Ermitteln, ob alle Ereignisfilterausdrücke im nächsten Ereignisfilter in Bezug auf die vorgegebene Bedingung bewerten (60);
(d) Übertragen des Ereignisses an den Ereignisverbraucher (61), falls alle Filterausdrücke im nächsten Ereignisfilter in Bezug auf die vorgegebene Bedingung bewerten;
(e) Zurückkehren zum Schritt (a), falls Filterausdrücke im Ereignisfilter nicht in Bezug auf die vorgegebene Bedingung bewerten.

5. Verfahren nach einem vorhergehenden Anspruch, bei dem die Informationen ein oder mehrere Ereignistypschemen sind, von denen jedes einen Ereignistyp beschreibt und eine Liste von Paaren aus Attributbezeichnung/Typ, die ein Datenformat eines Ereignisses spezifizieren, umfasst.

6. Verfahren nach Anspruch 5, bei dem ein Paar aus Attributbezeichnung/Typ eine Attributbezeichnung, die ein Attribut eines Ereignistyps kennzeichnet, und einen Attributtyp, der das Datenformat im Attribut definiert, umfasst.

7. Verfahren nach Anspruch 6, bei dem jeder Filterausdruck des Ereignisfilters eine Attributbezeichnung, einen Attributoperator und einen Attributwert umfasst, wobei der Attributoperator das im Ereignis bezeichnete Attribut und den Attributwert vergleicht.

8. Verfahren nach einem vorhergehenden Anspruch, bei dem die Informationen ein Vorsatz-Attribut ist, das einem Ereignis zugeordnet ist.

9. Verfahren nach einem vorhergehenden Anspruch, bei dem ein Ereignisverwaltungsservice (22) feststellt, ob ein Ereignis eines der bestimmten Ereignisse ist, die an den Ereignisverbraucher weiterzuleiten sind, wobei das Ereignis einem vorgegebenen Fernprozeduraufruf RPC zugeordnet ist und wobei das Verfahren ferner den Schritt des Weiterleitens der relevanten Ereignisse von dem Ereignisverwaltungsservice an den Ereignisverbraucher umfasst.

10. Verfahren nach Anspruch 9, bei dem der vorgegebene RPC von einem Ereignisaufzeichnungsservice (28) ausgegeben wird.

11. Verfahren nach Anspruch 9 oder 10, bei dem das Ereignis vom Ereignisverwaitungsservice an den Ereignisverbraucher unter Verwendung eines Fernprozeduraufrufs geliefert wird.

12. Verfahren nach einem der Ansprüche 9 bis 12, das ferner den Schritt des Registrierens (40) des Ereignisverbrauchers beim Ereignisverwaltungsservice enthält.

13. Verfahren nach Anspruch 12, das ferner den Schritt der Echtheitsprüfung des Ereignisverbrauchers bei einem Sicherheitsservice (18) enthält.

14. Verfahren nach Anspruch 12 oder 13, bei dem wenigstens einer der Ereignislieferanten die Ereignisverbraucher nicht wahrnimmt, die sich beim Ereignisverwaltungsservice registriert haben, um die Ereignisse dieses Ereignislieferanten zu empfangen.

15. Verfahren nach einem vorhergehenden Anspruch, das ferner den Schritt des Speicherns von Ereignissen in einem Ereignisprotokoll (42) enthält.

16. Computersystem zum Bereitstellen eines Ereignisverwaltungsservice in einer Umgebung mit verteilter Datenverarbeitung, bei dem Benutzer auf verteilte Betriebsmittel zugreifen können, umfassend:
Mittel (22) des Ereignisverwaltungsservice zum Aufbauen eines Ereigniskanals, durch den Ereignisse von einem oder mehreren Ereignislieferanten (24a bis 24n) an einen oder mehrere Ereignisverbraucher (26a bis 26n) geleitet werden; und
Mittel (45) zum Filtern der Ereignisse, die durch den einen oder die mehreren Ereignislieferanten erzeugt werden, um festzulegen, welche Ereignisse an den einen oder die mehreren Ereignisverbraucher geleitet werden, wobei die Filtermittel umfassen:
Mittel zum Definieren eines Ereignisfilters, das einen oder mehrere Filterausdrücke enthält,
wobei die Filtermittel **gekennzeichnet sind durch**:
Mittel, die eine Ereignisfiltergruppe für jeden Ereignisverbraucher definieren, wobei die Ereignisfiltergruppe das Ereignisfilter kennzeichnet;
Mittel, die die Ereignisfiltergruppe befähigen, mehr als ein Ereignisfilter zu kennzeichnen, wobei wenigstens das Ereignisfilter einen oder mehrere Filterausdrücke enthält und die Ereignisfiltergruppe Informationen enthält, die festlegen, ob bestimmte Ereignisse, die **durch** den einen oder die mehreren Ereignislieferanten erzeugt werden, an den Ereignisverbraucher übertragen werden; und
Mittel, die für ein Ereignis ermitteln, ob alle Ereignisfilterausdrücke eines Ereignisfilters einer Ereignisfiltergruppe in Bezug auf eine vorgegebene Bedingung bewerten; und
Mittel, die das Ereignis an den Ereignisverbraucher übertragen, wenn alie Ereignisfilterausdrücke eines Ereignisfilters der Ereignisfiltergruppe in Bezug auf die vorgegebene Bedingung bewerten.

17. Computersystem nach Anspruch 16, das ferner Mittel (31) für Fernprozeduranrufe umfasst zum Liefern von Ereignissen von dem einen oder den mehreren Ereignislieferanten an die Mittel des Ereignisverwaltungsservice und von den Mitteln des Ereignisverwaltungsservice an den einen oder die mehreren Ereignisverbraucher.

18. Computersystem nach Anspruch 16 oder 17, das femer Zugriffssteuermittel (18) enthält für die Echtheitsprüfung von Ereignisverbrauchem, um Ereignisse von den Mitteln des Ereignisverwaltungsservice zu empfangen.

19. Computersystem nach Anspruch 16, 17 oder 18, das ferner Mittel (20) des Ereignisaufzeichnungsservice enthält zum Bereitstellen von Ereignissen von dem einen oder den mehreren Ereignislieferanten an die Mittel des Ereignisverwaltungsservice.

20. Computersystem nach einem der Ansprüche 16 bis 19, bei dem jedes Ereignisfilter der Ereignisfiltergruppe einen oder mehrere Filterausdrücke enthält.

21. Computersystem nach einem der Ansprüche 16 bis 20, bei dem die Mittel zum Ermitteln umfassen:
Mittel, die ermitteln, ob alle Ereignisfilter in der Ereignisfiltergruppe bewertet wurden;
Mittel, die als Antwort auf die Ermittlung, dass nicht alle Ereignisfilter in der Ereignisfiltergruppe bewertet wurden, ein nächstes Ereignisfilter für die Bewertung wählen;
Mittel, die ermitteln, ob alle Filterausdrücke im nächsten Ereignisfilter in Bezug auf die vorgegebene Bedingung bewerten; und
Mittel, die als Antwort auf die Feststellung, dass alle Filterausdrücke im nächsten Ereignisfilter in Bezug auf die vorgegebene Bedingung bewerten, das Ereignis an den Ereignisverbraucher übertragen.

## Revendications

1. Un procédé de gestion d'événements dans un environnement informatique distribué, dans lequel un ou plusieurs fournisseurs d'événement (24a à 24n) génèrent des événements devant être communiqués à un ou plusieurs consommateurs d'événement (26a à 26n), comprenant les étapes consistant à :
faire définir par un consommateur d'événements un filtre d'événement (45) incluant une ou plusieurs expressions de filtre ;
le procédé étant **caractérisé par** les étapes consistant à :
le consommateur d'événements ayant défini un groupe de filtres d'événement identifiant le filtre d'événement, fournir audit groupe de filtres d'événement l'option d'identifier plus qu'un filtre d'événement, dans lequel au moins le filtre d'événement inclut une ou plusieurs expressions de filtre, le groupe de filtres d'événement incluant une information déterminant si des événements particuliers, générés par le un ou plusieurs fournisseurs d'événement, sont communiqués au consommateur d'événements ;
pour un événement donné, déterminer si toutes les expressions de filtre d'événement d'un filtre d'événement quelconque d'un groupe de filtres d'événement évaluent comme satisfaite une condition prédéterminée ; et
communiquer l'événement donné au consommateur d'événements, si toutes les expressions de filtre d'événement d'un filtre d'événement quelconque du groupe de filtres d'événement évaluent comme satisfaite la condition prédéterminée.

2. Le procédé selon la revendication 1, dans lequel le groupe de filtres d'événement comprend un ou plusieurs noms de filtres d'événement identifiant les uns ou plusieurs filtres d'événement.

3. Le procédé selon la revendication 1 ou 2, dans lequel chaque filtre d'événement du groupe de filtres d'événement comprend une ou plusieurs expressions de filtre.

4. Le procédé selon la revendication 1, 2 ou 3, dans lequel l'étape de détermination comprend les étapes consistant à :
(a) déterminer si tous les filtres d'événement dans le groupe de filtres d'événement ont été évalués (56) ;
(b) si tous les filtres d'événement dans le groupe de filtres d'événement n'ont pas été évalués, sélectionner un filtre d'événement subséquent pour évaluation (58) ;
(c) déterminer si la totalité des expressions de filtre dans le filtre d'événement suivant évaluent comme satisfaite la condition prédéterminée (60) ;
(d) si la totalité des expressions de filtre dans le filtre d'événement suivant évaluent comme satisfaite la condition prédéterminée, communiquer l'événement au consommateur d'événements (61) ;
(e) si l'une quelconque des expressions de filtre dans le filtre d'événement n'évalue pas comme satisfaite la condition prédéterminée, retourner à l'étape (a).

5. le procédé selon l'une quelconque des revendications précédentes, dans lequel l'information est un ou plusieurs schémas de type d'événement, décrivant chacun un type d'événement et comprenant une liste de paires de noms/types d'attribut, spécifiant un format de données d'un événement.

6. Le procédé selon la revendication 5, dans lequel une paire de noms/types d'attribut comprend un nom d'attribut, identifiant un attribut d'un type d'événement donné, et un type d'attribut, définissant le format de données dans l'attribut.

7. Le procédé selon la revendication 6, dans lequel chaque expression de filtre du filtre d'événement comprend un nom d'attribut, un opérateur d'attribut et une valeur d'attribut, dans lequel l'opérateur d'attribut compare l'attribut nommé dans l'événement et la valeur d'attribut.

8. Le procédé selon l'une quelconque des revendications précédentes, dans lequel l'information est un attribut d'en-tête, associé à un événement.

9. Le procédé selon l'une quelconque des revendications précédentes, dans lequel un service de gestion d'événements (22) identifie si un événement est l'un parmi des événements particuliers devant être transmis au consommateur d'événements, ledit événement étant associé à un appel de procédure à distance RPC prédéterminé, et ledit procédé comprenant en outre l'étape de transmission des événements afférents, du service de gestion d'événements au consommateur d'événements.

10. Le procédé selon la revendication 9, dans lequel le RPC prédéterminé est envoyé depuis un service d'enregistrement d'événements (28).

11. Le procédé selon la revendication 9 ou 10, dans lequel l'événement est fourni, depuis le service de gestion d'événements, au consommateur d'événements utilisant un appel de procédure distante.

12. Le procédé selon l'une quelconque des revendications 9 à 12, comprenant en outre l'étape d'enregistrement (40) du consommateur d'événements auprès du service de gestion d'événements.

13. Le procédé selon la revendication 12, comprenant en outre l'étape d'authentification du consommateur d'événements par un service de sécurité (18).

14. Le procédé selon la revendication 12 ou 13, dans lequel au moins l'un des fournisseurs d'événement n'a pas connaissance des consommateurs d'événements ayant été enregistrés auprès du service de gestion d'événements pour recevoir ces événements de la part du fournisseur d'événements.

15. Le procédé selon l'une quelconque des revendications précédentes, comprenant en outre l'étape de sauvegarde d'événements dans un journal d'événement (42).

16. Un système d'ordinateur pour fournir un service de gestion d'événements dans un environnement informatique distribué, dans lequel des utilisateurs peuvent accéder à des ressources distribuées, comprenant :
des moyens de service de gestion d'événements (22) pour établir un canal d'événements par lequel des événements sont passés d'un ou plusieurs fournisseurs d'événements (24a à 24n) vers un ou plusieurs consommateurs d'événements (26a à 26n) ; et
des moyens (45), pour filtrer des événements générés par les uns ou plusieurs fournisseurs d'événement, afin de déterminer quels événements sont passés vers les uns ou plusieurs consommateurs d'événements, dans lequel les moyens de filtrage comprennent :
des moyens pour définir un filtre d'événements, incluant une ou plusieurs expressions de filtre ;
les moyens de filtrage étant **caractérisés par** :
des moyens pour définir un groupe de filtres d'événement pour chaque consommateur d'événements, le groupe de filtres d'événement identifiant le filtre d'événement ;
des moyens pour activer le groupe de filtres d'événement, afin d'identifier plus qu'un filtre d'événement, dans lequel au moins le filtre d'événement comprend une ou plusieurs expressions de filtre, le groupe de filtres d'événement incluant une information déterminant si des événements particuliers, générés par les un ou plusieurs fournisseurs d'événements, sont communiqués au consommateur d'événements ; et
des moyens pour déterminer, pour un événement donné, si toutes les expressions de filtre d'événement d'un filtre d'événement quelconque d'un groupe de filtres d'événement évaluent comme satisfaite une condition prédéterminée ; et
des moyens pour communiquer l'événement donné au consommateur d'événements, si la totalité des expressions de filtre d'événement pour un filtre d'événement quelconque du groupe de filtres d'événement évaluent comme satisfaite la condition prédéterminée.

17. Le système d'ordinateur selon la revendication 16, comprenant en outre des moyens d'appel de procédure distance (31), pour fournir des événements depuis les un ou plusieurs fournisseurs d'événement aux moyens de service de gestion d'événements et, des moyens de service de gestion d'événements, au un ou plusieurs consommateurs d'événements.

18. Le système d'ordinateur selon la revendication 16 ou 17, comprenant en outre des moyens de commande d'accès (18), pour authentifier des consommateurs d'événements, pour recevoir des événements depuis les moyens de service de gestion d'événements.

19. Le système d'ordinateur selon la revendication 16, 17 ou 18, comprenant en outre des moyens de service d'enregistrement d'événements (20) pour fournir des événements, depuis les un ou plusieurs fournisseurs d'événement, aux moyens de service de gestion d'événements.

20. Le système d'ordinateur selon l'une quelconque des revendications 16 à 19, dans lequel chaque filtre d'événement du groupe de filtres d'événement comprend une ou plusieurs expressions de filtre.

21. Le système d'ordinateur selon l'une quelconque des revendications 16 à 20, dans lequel les moyens pour déterminer comprennent:
des moyens pour déterminer si tous les filtres d'événement dans le groupe de filtres d'événement ont évalués comme satisfaisant ;
des moyens, réagissant à la détermination du fait que tous les filtres d'événement dans le groupe de filtres d'événement n'ont pas évalués comme satisfaisant, afin de sélectionner un nouveau filtre d'événement pour évaluation comme satisfaisant ;
des moyens, pour déterminer si la totalité des expressions de filtre dans le filtre d'événement suivant évaluent comme satisfaite la condition prédéterminée ; et
des moyens, réagissant à la détermination du fait que la totalité des expressions de filtre dans le filtre d'événement suivant, évaluent comme satisfaite la condition prédéterminée, pour communiquer l'événement au consommateur d'événements.
